Europäisches Patentamt

European Patent Office

Office européen des brevets

(11) Numéro de publication: **0 078 232 B1**

(12) **FASCICULE DE BREVET EUROPEEN**

(45) Date de publication du fascicule du brevet: **22.04.87**

(51) Int. Cl.⁴: **A 22 C 17/00**

(21) Numéro de dépôt: **82430031.3**

(22) Date de dépôt: **08.10.82**

(54) **Embrocheur pour la préparation de brochettes de viande et/ou autres produits alimentaires.**

(30) Priorité: **28.10.81 FR 8120367**

(43) Date de publication de la demande:
**04.05.83 Bulletin 83/18**

(45) Mention de la délivrance du brevet:
**22.04.87 Bulletin 87/17**

(84) Etats contractants désignés:
**AT BE CH DE FR GB IT LI LU NL SE**

(56) Documents cités:
**FR-A-2 494 092**
**NL-A-6 813 550**
**US-A-2 303 566**
**US-A-3 691 608**

(73) Titulaire: **Dolle, Jacques**
**Chemin Bel Air**
**F-30650 Rochefort-du-Gard (FR)**

(72) Inventeur: **Dolle, Jacques**
**Chemin Bel Air**
**F-30650 Rochefort-du-Gard (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

EP 0 078 232 B1

## Description

La présente invention concerne un embrocheur ou machine pour l'embrochement automatique de tranches ou couches de viande et/ou d'autres produits alimentaires tels que poisson, légumes ou fruits divers, en vue de la confection des brochettes prêtes à la cuisson.

De manière plus particulièrement intéressante, bien que nullement limitative, l'invention vise un embrocheur apte à utiliser des bacs de découpage et d'embrochement d'un type connu, décrit par exemple dans le document NL—A—68 13550, dont les parois latérales sont, de façon connue, pourvues de fentes verticales pour le passage d'une ou plusieurs lames tranchantes et comprenant généralement une plaque de fond et un couvercle dotés de rangées de trous verticaux permettant le coulissement et le guidage des "piques" constituées par des bâtonnets de bois ou par des tiges métalliques. De tels bacs de découpage et d'embrochement permettent de réduire notablement le temps de préparation des brochettes de viande et/ou de légumes, surtout lorsqu'ils sont associés à des machines de découpage dotées d'une pluralité de lames tranchantes. En effet, après empilement des tranches de viande et/ou de légumes ou autres produits alimentaires, dans le bac, et enfoncement des piques, il est ainsi possible de découper, à l'aide des lames tranchantes introduites et guidées dans les fentes verticales des paires de parois perpendiculaires dudit bac, les couches superposées de viande et/ou de légumes ou autre produite alimentaire, pour obtenir des morceaux calibrés, carrés ou rectangulaires, embrochés sur les bâtonnets ou les tiges constituant lesdites piques.

Toutefois, le préparation des brochettes requiert encore un temps relativement long, compte tenu du fait que l'on n'a pas encore résolu, de manière satisfaisante, le problème posé par l'embrochement des tranches de viande ou autre produit alimentaire. On est donc conduit à effectuer une pré-perforation des couches de viande empilées, à l'aide de solides tiges rigides et pointues, ce qui exige des efforts répétés devenant vite pénibles, et on procède ensuite à l'enfoncement unitaire des piques qui n'ont pas toujours tendance à suivre exactement le passage ouvert par la pré-perforation, ce qui entraîne ensuite leur sectionnement lors du tranchage.

Pour tenter de remédier aux contraintes de l'enfoncement manuel et unitaire des piques, le demandeur a déjà conçu (demande de brevet français FR—A—2 494 092 publiée le 21 Mai 1982, un dispositif d'embrochement automatique comprenant une ou plusieurs paires de rouleaux horizontaux accouplés à friction et pourvus de gorges annulaires régulièrement espacées, les points de rencontre des gorges annulaires desdites paires de rouleaux étant disposés en alignement avec les trous des plateaux inférieur et supérieur, respectivement, du bac de découpage; l'entraînement en rotation desdites paires de rouleaux permettant l'enfoncement des piques utilisées pour la confection des brochettes, en direction dudit bac de découpage. Toutefois, un tel dispositif ne donne pas entière satisfaction, car les piques ne s'enfoncent pas toujours de manière rectiligne et il arrive fréquemment que certaines d'entre elles soient déviées et se tordent, par exemple lors de la rencontre de morceaux cartilagineux qui peuvent se trouver dans les tranches de viande. En outre, même avec un tel dispositif, il est souvant nécessaire d'effectuer une pré-perforation des tranches de viande empilées.

Un but de la présente invention est donc de remédier aux inconvénients de l'embrochement manuel ou des procédés de substitution qui ont été proposés jusqu'à ce jour.

Selon l'invention, cet objectif est atteint au moyen d'une machine remarquable par le fait qu'elle comprend:

— un plateau de réception pourvu de trous de passage, pour recevoir au moins une couche de produits alimentaires,
— un organe presseur susceptible d'être appliqué sur ladite couche reposant sur ledit plateau de réception,
— une pluralité de tubes d'embrochement présentant un axe longitudinal et comportant au moins une portion d'extrémité susceptible de recevoir intérieurement, coaxialement, avec possibilité de coulissement relatif coaxial, une petite broche ou pique, chacun des tubes d'embrochement étant lui-même susceptible de coulissement longitudinal coaxial dans un trou respectif du plateau de réception,
— des moyens pour provoquer un déplacement relatif longitudinal des tubes d'embrochement et du plateau de réception, pour alternativement introduire les tubes d'embrochement par ladite portion d'extrémité dans une position entre le plateau de réception et l'organe presseur, moyennant un coulissement des tubes d'embrochement dans un sens déterminé dans les trous du plateau de réception, puis dégager les tubes d'embrochement moyennant un coulissement en sens inverse dudit sens déterminé desdits tubes et dudit plateau,
— des moyens pour immobiliser lesdites petites broches ou piques à l'encontre d'un coulissement dans les tubes d'embrochement dans ledit sens inverse, lesdits moyens permettant de laisser les petites broches ou piques libres vis-à-vis d'un coulissement dans les tubes d'embrochement dans ledit sens déterminé.

Notamment, lesdits moyens pour immobiliser les petites broches ou piques à l'encontre d'un coulissement dans les tubes d'embrochement dans ledit sens inverse comportent des tiges de soutien et d'éjection des petites broches ou piques, montées avec latitude de coulissement longitudinal relatif à l'intérieur des tubes d'embrochement.

Grâce à cette machine d'embrochement, il est possible d'embrocher successivement les tranches de viande ou autre produit alimentaire sur les tubes d'embrochement dans lesquels sont logées les broches ou piques qui reposent sur les tiges de soutien et d'éjection, puis, lorsqu'une épaisseur suffisante de couches superposées a été embrochée, les tubes d'embrochement sont retirés de l'empilage de viande qui demeure sur les plateau de réception et reste embroché par les piques éjectées desdits tubes d'embrochement par l'action desdites tiges soutient et d'éjection qui les empêche de se retirer en même temps que ces derniers.

L'invention permet un embrochement automatique, rapide, parfait et sans effort important, des impilages de tranches de viande et/ou de légumes, fruits ou poisson, destinés à la confection des brochettes, cet embrochement pouvant, de manière très intéressante, être exécuté dans des bacs de découpage sensiblement analogues aux bacs de découpage actuellement utilisés.

Suivant une autre caractéristique de l'invention, les tiges de soutien et d'éjection sont montées avec une latitude de translation axiale, de manière à pouvoir être dégagées complètement du plateau de réception et du fond du panier de découpage, de même que les tubes d'embrochement et les canons d'entraînement supportant ledit plateau de réception, le support du panier de découpage étant monté avec une aptitude de rotation sur au moins 90°, de manière à permettre de présenter deux faces verticales perpendiculaires dudit panier de découpage en regard d'au moins un poste de découpe ou d'un dispositif de découpe équipant la machine.

Grâce à un tel agencement, il est possible de confectionner des brochettes, en grande quantité et de façon automatique, à l'aide d'une seule machine et sans manipulation du panier de découpage entre les opérations d'embrochement et de découpe.

Ces buts, caractéristiques et avantages, et d'autres encore, ressortiront mieux de la description qui suit et des dessins annexés dans lesquels:

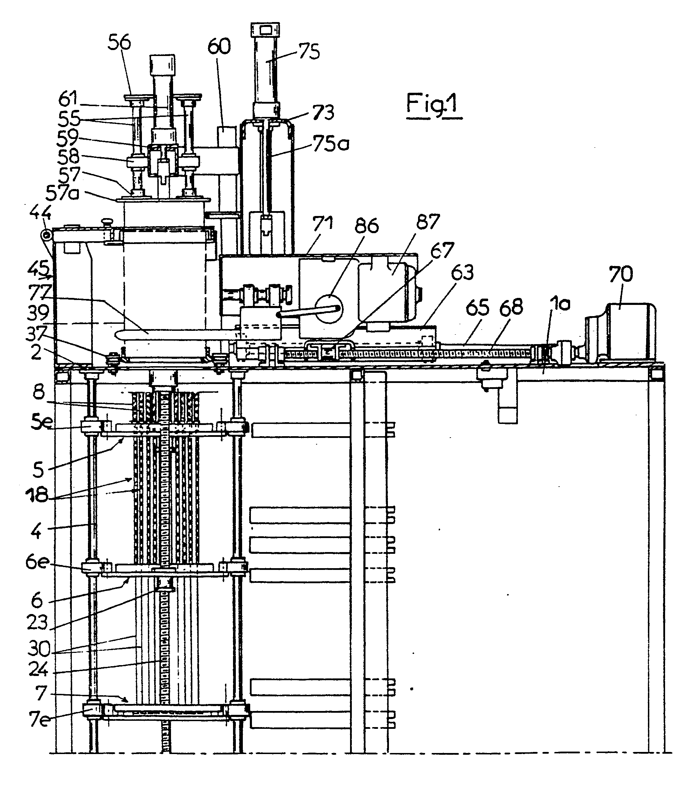

La figure 1 est une vue de côté de la machine pour la préparation automatique de brochettes, selon l'invention.

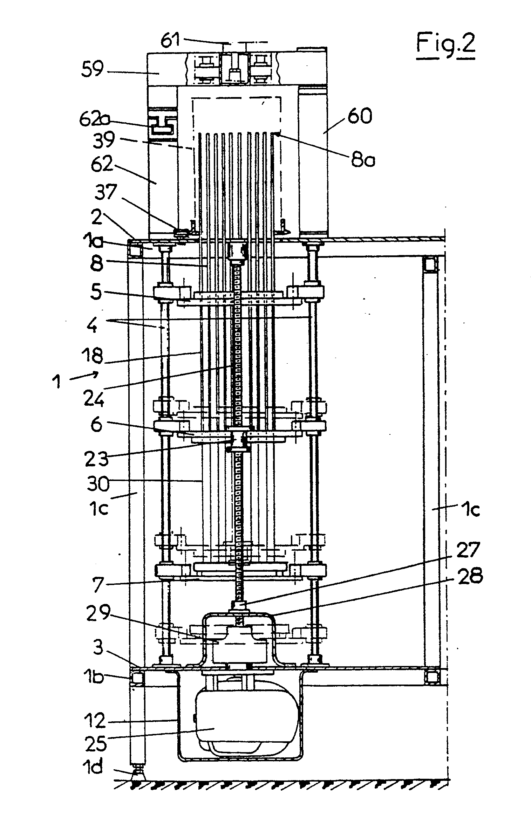

La figure 2 est une vue de côté de l'embrocheur proprement dit; les tracés en traits interrompus illustrent la position basse des plateaux supérieur, intermédiaire et inférieur.

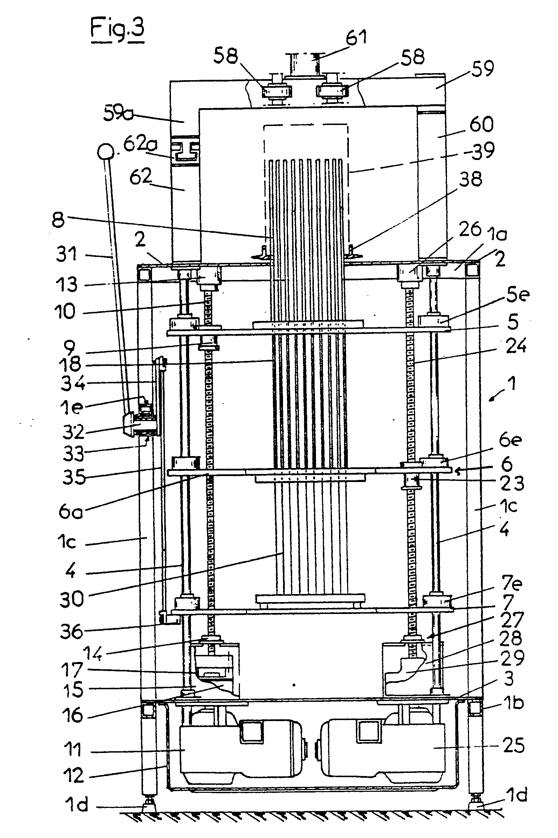

La figure 3 est une vue de face de cet embrocheur.

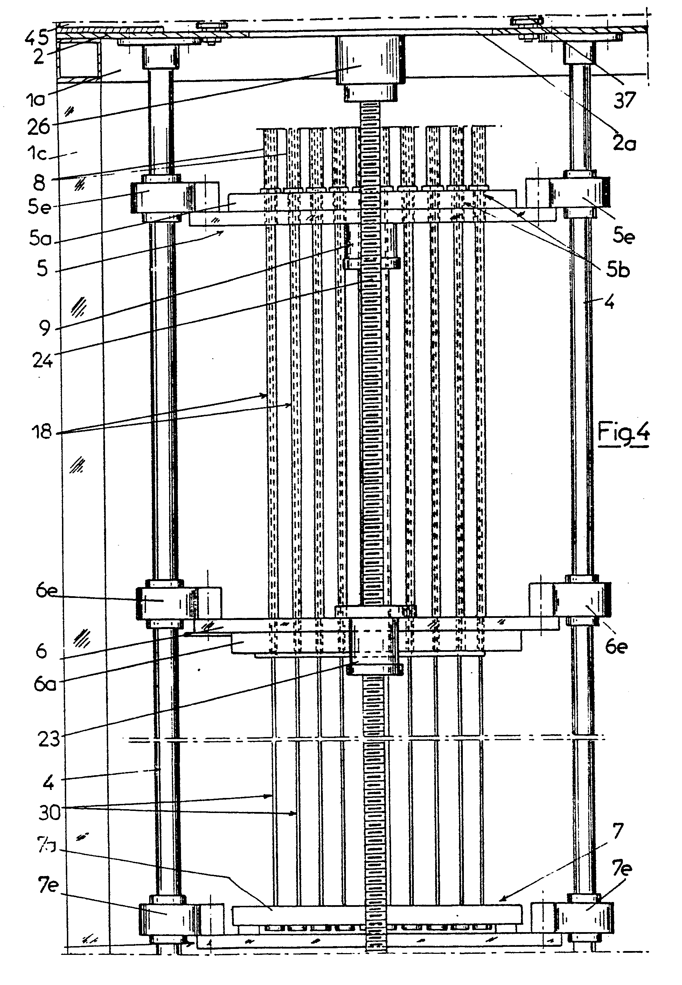

La figure 4 est une vue de détail illustrant le montage des plateaux mobiles portant les canons d'entraînement, les tubes d'embrochage et les tiges de soutien et d'éjection.

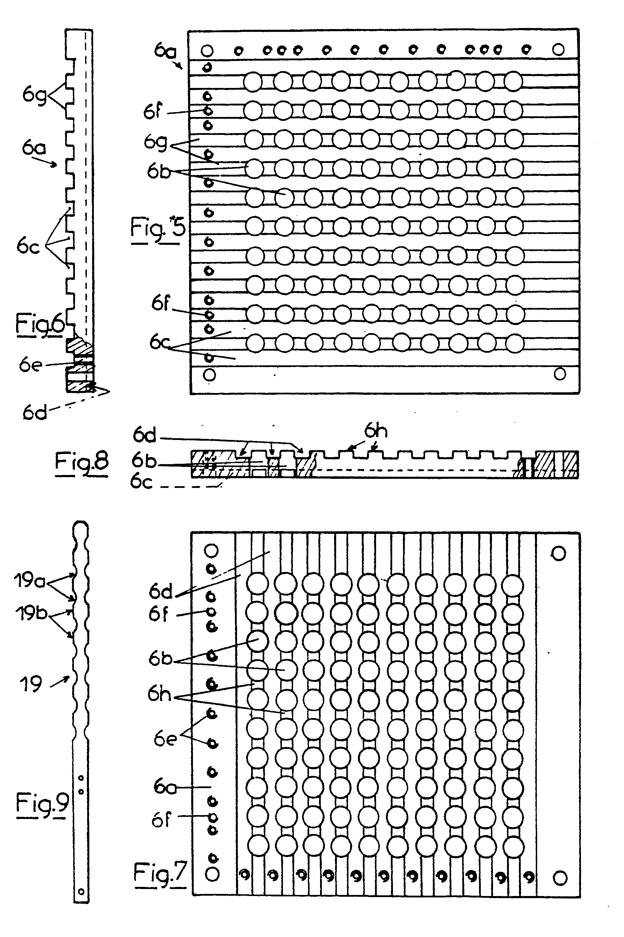

La figure 5 est une vue en plan de la plaque démontable portant les tubes d'embrochage amovibles.

La figure 6 est une vue de côté avec coupe partielle, de cette plaque.

La figure 7 en est une vue de dessous.

La figure 8 est une vue de côté, avec coupes partielles, de la figure 7.

La figure 9 est une vue en plan d'une barrette de verrouillage des tubes d'embrochage.

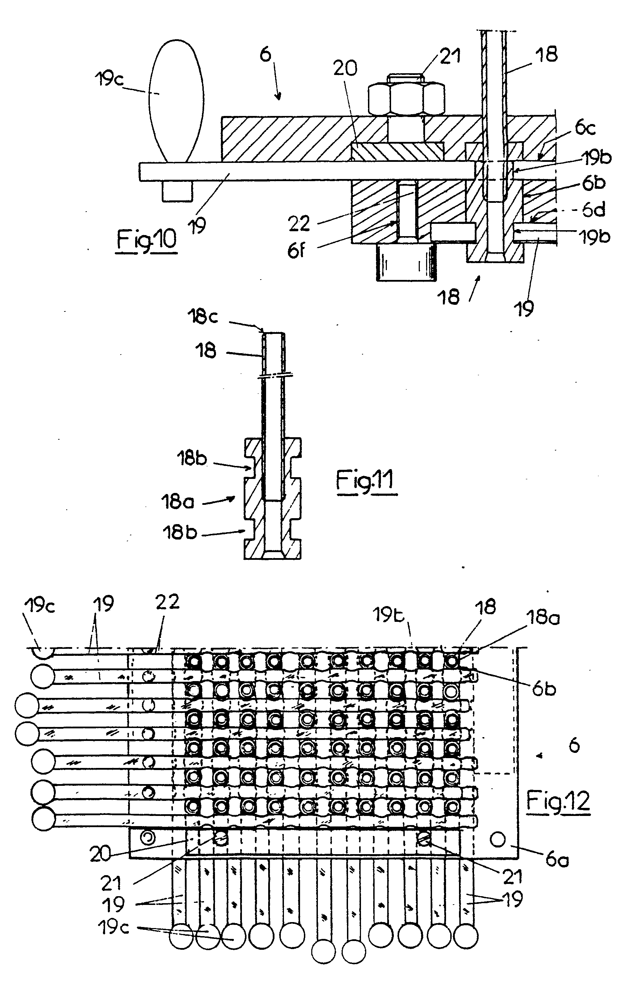

La figure 10 est une vue de détail, en coupe et à plus grande échelle, illustrant le montage démontable des tubes d'embrochage sur leur plaque-support.

La figure 11 est une vue en coupe longitudinale d'une tube d'embrochage.

La figure 12 est une vue en plan montrant la libération d'un tube d'embrochage.

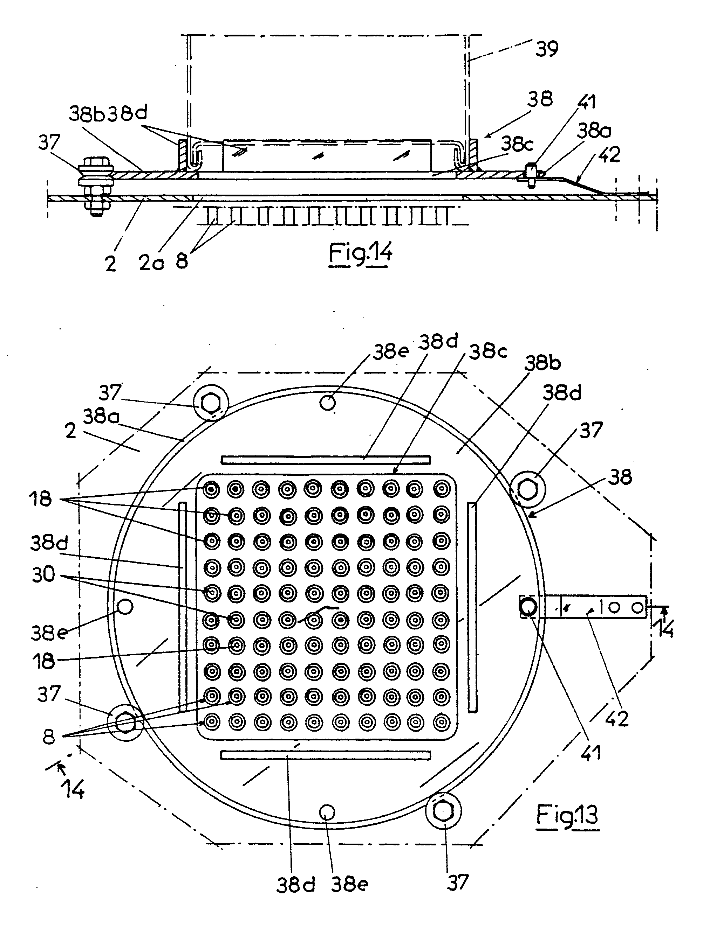

La figure 13 est une vue en plan du support de panier rotatif.

La figure 14 est une vue en coupe selon la ligne 14—14 de la figure 13.

La figure 15 est une vue de côté en en coupe verticale des moyens de positionnement et de verrouillage du panier.

La figure 16 est une vue de côté et en coupe des moyens de guidage des lames du dispositif de découpe.

La figure 17 est une vue de face, à échelle plus réduite, de ces moyens de guidage.

La figure 18 en est une vue en plan, sans la cadre supérieur de verrouillage.

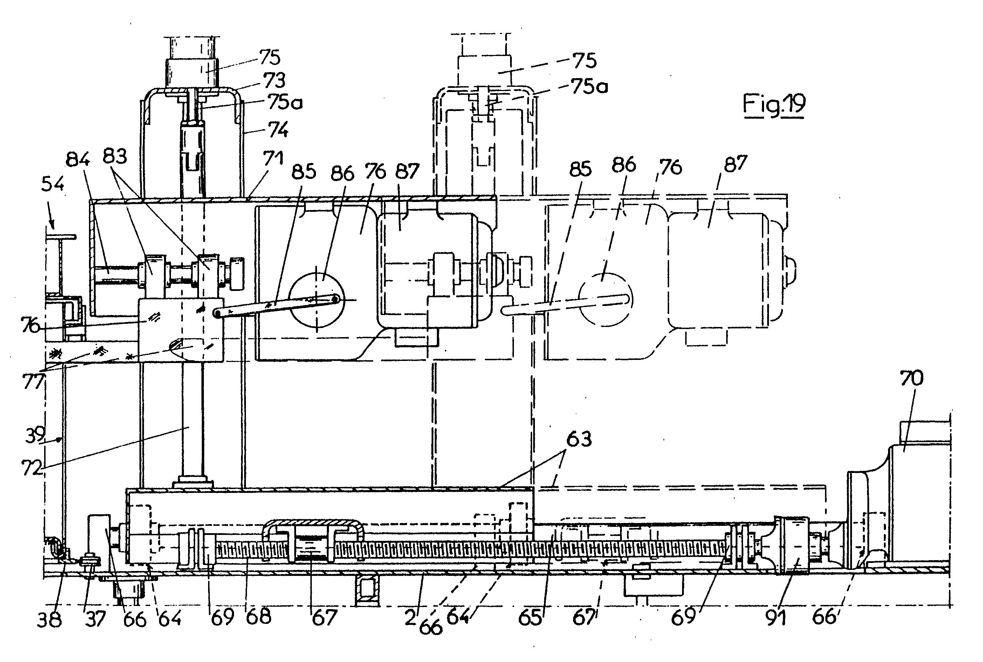

La figure 19 est une vue de côté, avec coupe partielle, du poste de découpe de la machine, le dispositif de découpe proprement dit étant représenté en position haute avancée, ls tracé en traits interrompus illustrant la position dudit dispositif avant son déplacement en direction du bac de découpe.

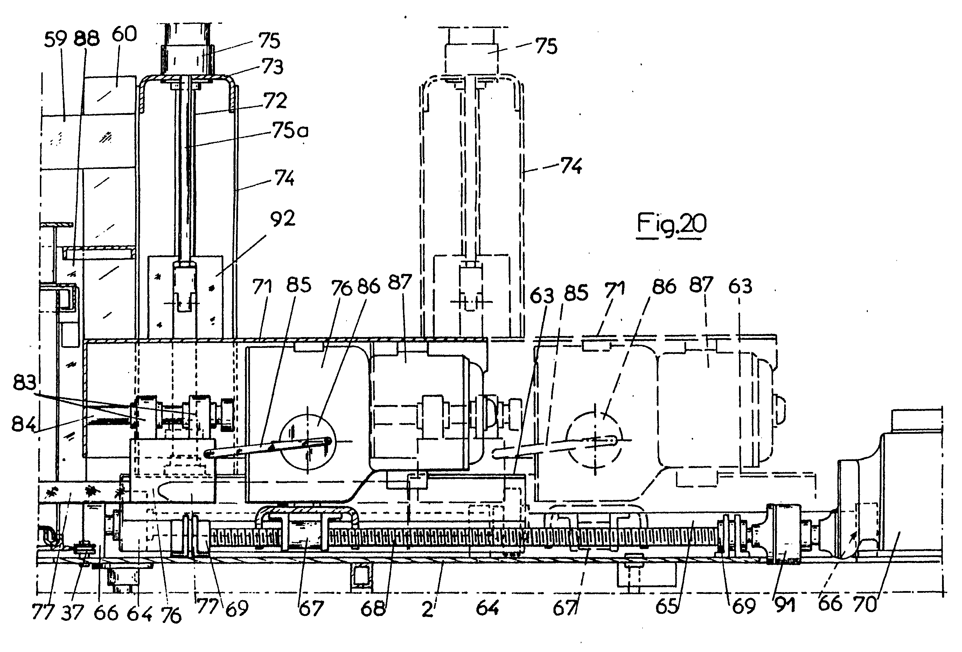

La figure 20 est une vue analogue à la figure 19, dans laquelle le dispositif de découpe proprement dit est illustré en position basse avancée, le tracé en traits interrompus montrant la. position de recul ou de départ dudit dispositif.

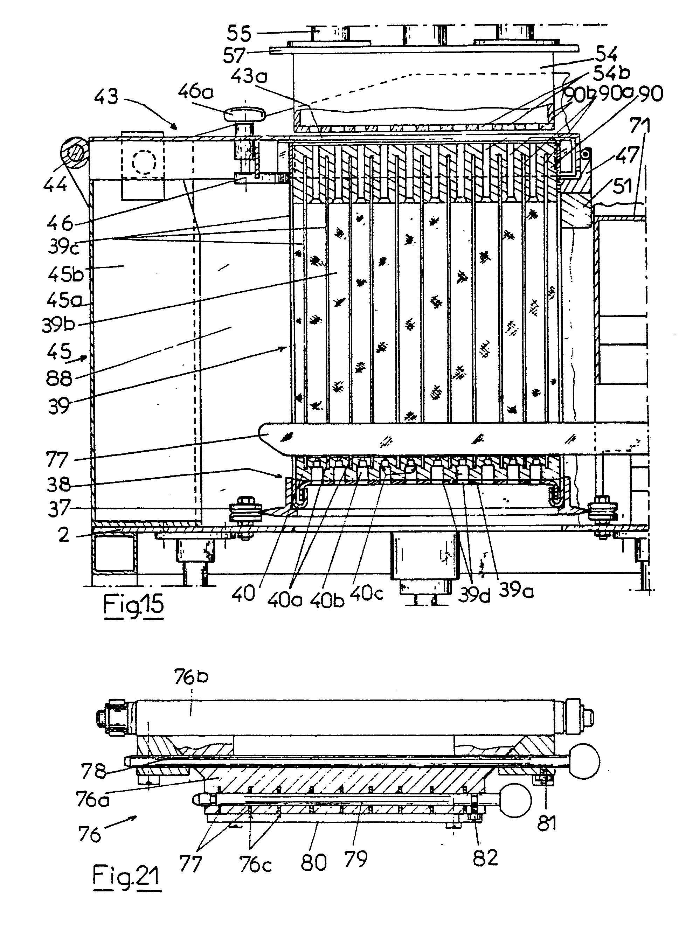

La figure 21 est une vue de détail avec coupe transversale, montrant le montage amovible du porte-lames sur son bloc-support et des lames sur ledit porte-lames.

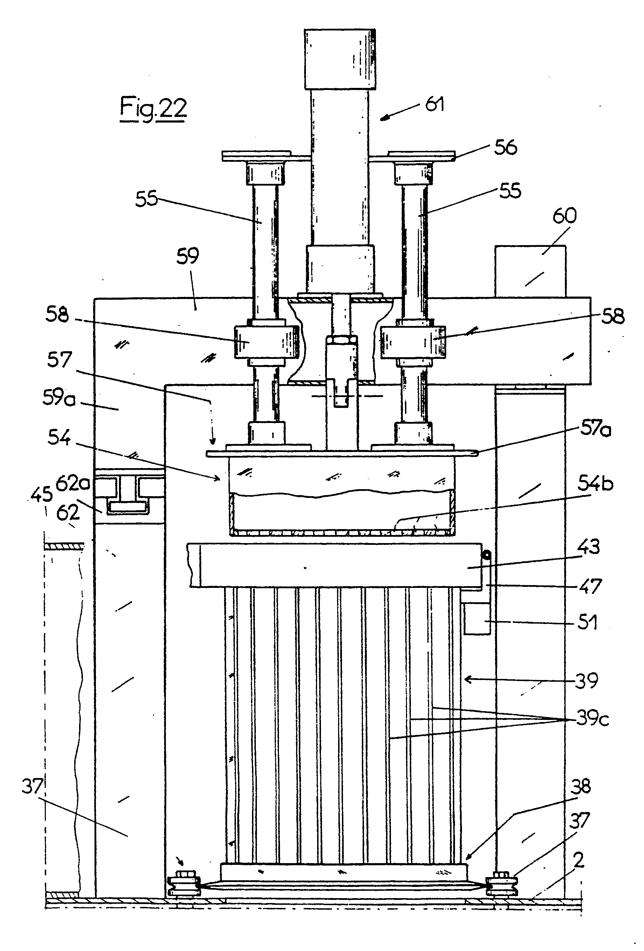

La figure 22 est une vue de côté, avec coupes partielles, du dispositif presseur de l'embrocheur.

Les figures 23 à 26 sont des vues de faces illustrant le fonctionnement du dispositif d'embrochage de l'embrocheur.

Les figures 27 à 30 sont des vues de détail correspondant, respectivement, aux figures 23 à 26 et montrant le positionnement des canons d'entraînement, des tubes d'embrochage, des tiges de soutien et d'éjection et des piques lors des différentes phases de l'embrochage.

On se reporte auxdits dessins pour décrire un exemple d'exécution intéressant, bien que nullement limitatif, de la machine pour la confection automatique de brochettes selon l'invention.

Dans la présente description et dans les revendications, il est convenu, dans un but de clarté, que le terme "brochette" designe l'article obtenu grâce à la machine selon l'invention et constitué par une pluralité de petits morceaux embrochés de viande et/ou de légumes, fruits, poisson, tandis que le terme "pique" désigne la petite broche ou batonnet destinée à l'embrochement desdits morceaux.

La machine selon l'invention comprend un bâti 1, par exemple réalisé à l'aide de tubes mécano-soudés de section carrée et comportant principalement un cadre supérieur 1a et un cadre inférieur 1b reliés par des montants 1c. Ce bâti repose sur quatre pieds 1d réglables de toute manière connue pour la mise à niveau. Sur les cadres supérieur 1a et inférieur 1b, sont fixées des plaques 2 et 3, respectivement. Ces plaques sont rigidement reliées par quatre colonnes de guidage 4 dont les points de fixation sont placés aux angles d'un quadrilatère. Entre la plaque fixe supérieure 2 et la plaque fixe inférieure 3, sont montés, avec une aptitude de déplacement vertical, un plateau supérieur 5, un plateau intermédiaire 6, et un plateau inférieur 7, dont les angles sont équipés de douilles à billes, respectivement 5e, 6e, 7e, facilitant leur coulissement sur les colonnes de guidage 4.

Le plateau supérieur 5 porte une pluralité de canons de guidage et d'entraînement 8 fixés, verticalement, par leur extrémité inférieure. De manière intéressante, les canons d'entraînement verticaux sont portés par une plaque 5a fixée, de manière amovible, sur la plateau 5 proprement dit pourvu d'une large ouverture centrale, de façon à autoriser le remplacement commode et rapide d'un ensemble interchangeable comportant un certain nombre de canons d'entraînement, par un autre ensemble comprenant un nombre plus important ou plus réduit de ces derniers. Les extrémités inférieures des canons d'entraînement sont fixées dans des trous 5b que présente la plaque 5a. Les canons de guidage et d'entraînement sont constitués par des tubes dont l'extrémité supérieure est pourvue d'un épaulement circulaire 8a. Le plateau supérieur 5 est équipé d'un écrou à bille 9 disposé hors de l'aire centrale d'implantation de l'extrémité inférieure des canons de guidage et d'entraînement et au-dessous dudit plateau. Cet écrou à bille coopère avec un arbre vertical fileté 10 entraîné en rotation par un motoréducteur 11 logé dans un carter 12 fixé sous la plaque inférieure 3. L'extrémité supérieure de l'arbre-vis 10 tourillonne dans un palier 13 porté par la plaque fixe supérieure 2 et disposé au-dessous de cette dernière, tandis que sa partie inférieure tourillonne dans une palier 14 porté par un carter 15 installé sur la plaque inférieure 3. Un dispositif limiteur de couple 16 est disposé à la sortie du motoréducteur 11, et l'arbre de sortie de ce limiteur de couple est accouplé à l'extrémité inférieure de l'arbre-vis 10, par l'intermédiaire d'une roue libre 17 de construction connue en soi.

La mise en rotation de l'arbre-vis 10 dans le sens adéquat entraîne un mouvement ascendant du plateau supérieur 5, tandis que la roue libre 17 autorise la descente de ce dernier sous un effort de pression exercé de haut en bas, cet effort étant en effet suffisant pour provoquer la rotation de l'arbre-vis, grâce à la faible friction exercée par l'écrou à bille 9.

Le plateau intermédiaire 6 porte une pluralité de tubes d'embrochement 18 fixés, verticalement, par leur extrémité inférieure.

Les tubes d'embrochement verticaux sont avantageusement portés par une plaque 6a fixée, de manière amovible, sous le plateau 6 proprement dit comportant une large ouverture centrale, pour permettre le remplacement aisé et rapide d'une ensemble interchangeable comportant un certain nombre de tubes d'embrochement, par un autre ensemble comprenant un nombre plus important ou plus réduit de ces derniers.

Les tubes d'embrochement 18 ont un diamètre extérieur à peine inférieur au diamètre de l'alésage des canons de guidage et d'entraînement 8, et ils ont une longueur qui est sensiblement un peu plus du double de celle de ces derniers dans lesquels ils sont logés avec une aptitude de coulissement. D'autre part, les tubes d'embrochement ont une extrémité supérieure 18c effilée ou chanfreinée et ils coulissent à travers les trous 5b ménagés dans la plaque 5a; et dans lesquels sont fixées ou logées les extrémités inférieures des canons de guidage et d'entraînement 8.

Le plateau intermédiaire 6 ou, suivant le mode d'exécution avantageux illustré, la plaque 6a et les tubes d'embrochement 18 sont agencés pour autoriser, en cas de besoin, le remplacement unitaire des tubes détériorés, par exemple tordus.

Pour cela, l'extrémité inférieure des tubes d'embrochement est équipée d'une douille de montage 18a comportant, sur sa périphérie, deux gorges annulaires 18b espacées.

D'autre part, la plaque 6a comporte, dans ses faces supérieure et inférieure, des rainures parallèles respectivement 6c et 6d de section carrée ou rectangulaire, les rainures ménagées dans la face supérieure étant perpendiculaires aux rainures réservées dans la face inférieure. Des trous 6b sont ménagés dans l'épaisseur de la plaque 6a aux points d'intersection verticaux des bandes saillantes 6g, 6h séparant les rainures 6c, 6d, respectivement. Ces trous ont un diamètre très légèrement supérieur à celui des douilles 18a des tubes d'embrochement 18, de façon à autoriser le coulissement sans jeu excessif et le logement de ces dernières. D'autre part, les trous 6b et les douilles 18a ont un diamètre plus important que la largeur des bandes saillantes 6g, 6h, cette largeur étant égale au diamètre des portions desdites douilles délimitées par le fond des gorges 18b. Une barrette de verrouillage 19 eut logée, avec une latitude de translation longitudinale, dans chaque rainures 6c ou 6d. Cette barrette de verrouillage comporte, dans chacun de ses bords longitudinaux, des échancrures 19a placées en succession et dont le rayon est à peine supérieur au rayon de la douille de montage 18a des tubes d'embrochement 18. Ces échancrures sont espacées et séparées par des languettes de verrouillage 19b. Afin de faciliter leur coulissement dans les rainures 6c ou 6d de la plaque 6a, les barrettes de verrouillage 19 sont munies à l'une de leurs extrémités, d'un bouton de manoeuvre 19c en forme d'ogive. Les barrettes de verrouillage sont maintenues dans les rainures 6c ou 6d au moyen d'une barre de guidage 20 fixée, par exemple au moyen de vis 21, le long de l'un des bords de la plaque 6a, perpendiculairement auxdites barrettes de verrouillage lesquelles sont bloquées dans la position de verrouillage au moyen de vis-poussoirs 22 se vissant dans des taraudages 6f ménagés dans la plaque 6a et débouchant dans le fond des rainures 6c et 6d, à proximité de l'un des bords de ladite plaque.

La douille de montage 18a de chaque tube d'embrochement 18 est positionnée dans un trou 6b de la plaque 6a, et ladite douille se trouve bloquée par les languettes latérales 19b d'une paire de barrettes de verrouillage supérieure et d'une paire de barrettes de verrouillage inférieure disposées perpendiculairement, lesdites languettes étant engagées dans les gorges annulaires 18b de la douille.

Pour enlever un tube d'embrochement quelconque, il suffit donc de faire coulisser les paires de barrettes de verrouillage perpendiculaires qui enserrent la douille de montage de ce tube, après les avoir déverrouillées, de manière à placer les échancrures 19a desdites barrettes de verrouillage en correspondance du trou 6b dans lequel est installée ladite douille qui peut ainsi être retirée de ce dernier. On comprend qu'en déplaçant, de la sorte, deux paires perpendiculaires de barrettes de verrouillage, seul le tube d'embrochement disposé à l'intersection desdites paires se trouvera libéré, tous les autres restant bloqués en position sur la plaque 6a. Le plateau intermédiaire 6 est équipé d'un écrou à bille 23 disposé hors de la zone centrale occupée par la plaque 6a, et au-dessous dudit plateau. Cet écrou à bille coopère avec un arbre vertical fileté 24 entrainé en rotation par un motoréducteur 25 également logé dans le carter 12.

L'extrémité supérieure de l'arbre vis 24 tourillonne dans un palier 26 porté par la plaque fixe supérieure 2 et disposé au-dessous de cette dernière, tandis que sa partie inférieure tourillonne dans un palier 27 porté par un carter en forme de pont 28 installé sur la plaque inférieure 3 et dans lequel est logé le dispositif limiteur de couple 29 interposé entre l'arbre de sortie du motoréducteur 25 et l'extrémité inférieure dudit arbre-vis.

Les écrous à bille 9 et 23 étant immobilisés en rotation, on conçoit que la mise en rotation des arbres-vis 10 et 24 engendre, suivant le sens de rotation de ces derniers, un mouvement ascendant ou descendant des plateaux supérieur 5 et intermédiaire 6, respectivement.

Le plateau inférieur 7 porte une pluralité de tiges de soutien et d'éjection 30 disposées verticalement et dont le diamètre est inférieur au diamètre de l'alésage des tubes d'embrochement 18. Elles sont logées à l'intérieur desdits tubes d'embrochement qui sont ainsi montés avec une aptitude de coulissement sur lesdites tiges. Ces dernières sont avantageusement assujetties, par leur extrémité inférieure, à une plaque 7a fixée, de manière amovible, sur le plateau 7 proprement dit, dans un but d'interchangeabilité. Comme indiqué précédemment au sujet de la fixation des canons d'entraînement et des tubes d'embrochement sur les plaques amovibles 5a et 6a, respectivement.

Les tiges de soutien et d'éjection 30 traversent les trous 6b du plateau intermédiaire 6—6a et les trous 5b du plateau supérieur 5—5a, et leur extrémité supérieure dépasse légèrement le niveau de la plaque supérieure 2 lorsque le plateau inférieur 7—7a se trouve en position haute.

Les mouvements ascendants et descendants du plateau inférieur 7—7a sont obtenus au moyen d'un système mécanique commandé manuellement. Ce système comprend une tige de manoeuvre 31 rigidement solidaire de l'une des extrémités d'un moyeu 32 monté tournant dans un palier 33 porté par une traverse horizontale le reliant deux montants 1c du bâti 1. Sur l'autre extrémité du moyeu, est rigidement fixé, par l'une de ses extrémités, un levier 34 dont l'extrémité opposée est articulée à l'une des extrémités d'une bielle 35. Cette dernière est articulée, par son extrémité opposée, à un organe d'attache 36 solidaire du plateau 7.

Une ouverture 2a de forme carrée est ménagée dans la plaque supérieure fixe 2, pour le passage des canons d'entraînement 8, des tubes d'embrochement 18 et de l'extrémité supérieure des tiges de soutien et d'éjection 30.

Autour de cette ouverture, sont positionnées, avec un espacement régulier, des galets à gorge 37, par exemple au nombre de quatre espacés de 90°, lesdits galets étant montés à rotation libre autour d'axes verticaux portés par la plaque 2.

Dans la gorge des galets 37 est logé le bord circulaire 38a du support de panier 38 lequel est ainsi supporté, avec une aptitude de rotation, par lesdits galets. Le support de panier est constitué par une plaque circulaire 38b pourvue d'une ouverture centrale 38c de forme carrée et dont les dimensions peuvent être égales ou à peine inférieures à celles de l'ouverture 2a de la plaque 2. Parallèlement aux bords de l'ouverture 38c et à faible distance de ces derniers, la plaque 38b porte des parois verticales 38d de hauteur réduite délimitant un logement de forme carrée pour la partie inférieure d'un bac ou panier d'embrochement et de découpage 39.

Ce panier de découpage comprend, de manière connue, un fond 39a et quatre parois latérales 39b assemblés de manière démontable, ces dernières étant pourvues de fentes verticales 39c de guidage.

Dans le panier ainsi réalisé, est logé un plateau de guidage inférieur 40 dont la face supérieure est dotée d'une pluralité de gorges perpendiculaires 40a disposées au droit des fentes 39c des parois verticales 39b, ces gorges forment ainsi un quadrillage délimitant des rangées de petites aires d'appui de surface carrée.

Selon l'invention, les tubes d'embrochement 17 sont montés avec une latitude de coulissement dans un plateau de réception et, de manière particulièrement avantageuse, ce plateau de réception est constitué par le plateau 40 du panier de découpage, lequel est monté de manière "flottante" à l'intérieur de ce dernier, c'est-à-dire qu'il peut être déplacé en translation verticale.. Il est percé d'une pluralité de trous 40b disposés au centre des petites surfaces d'appui carrées et autorisant le passage et le coulissement des tubes d'embrochement 18, et dont le nombre et la disposition correspondent au nombre et à la disposition desdits tubes.

Chaque trou 40b du plateau flottant comporte deux échancrures circulaires superposées s'ouvrant sur la face inférieure dudit plateau et destinées au logement de l'extrémité supérieure des canons d'entraînement et de guidage 8 dont l'épaulement 8a est appelé à venir en appui contre l'épaulement circulaire 40c délimitant l'échancrure inférieure de plus grand diamètre dudit trou. D'autre part, le fond 39a du panier de découpage est également percé de trous 39d pour le passage et le coulissement des canons d'entraînement 8.

Enfin, le panier d'embrochement et de découpage est complété, par un couvercle de compression 90 se positionnant dans la partie supérieure dudit panier lorsque le remplissage de ce dernier est terminé. De manière connue, ce couvercle de compression est doté d'une pluralité de trous 90b le traversant dans son épaisseur et sa face inférieure est pourvue de gorges perpendiculaires 90a, lesdits trous et lesdites gorges étant disposés en regard des trous 40b et des gorges 40a, respectivement, dont est pourvu le plateau flottant 40. Les gorges de guidage 90a ont une hauteur supérieure à la largeur des couteaux du dispositif de découpe décrit par la suite. La base circulaire 38b du support de panier 38 comporte, à proximité de sa périphérie, quatre trous équidistants 38e espacés de 90°. Ces trous sont destinés à coopérer avec un doigt de positionnement 41 porté par une lame-ressort 42 fixée sur la plaque supérieure 2. Ce doigt a pour fonction d'immobiliser le support de panier 38 dans deux positions perpendiculaires, ce qui permet de présenter deux faces perpendiculaires du panier de découpage 39 en regard d'un poste de découpage ou d'un dispositif de découpe.

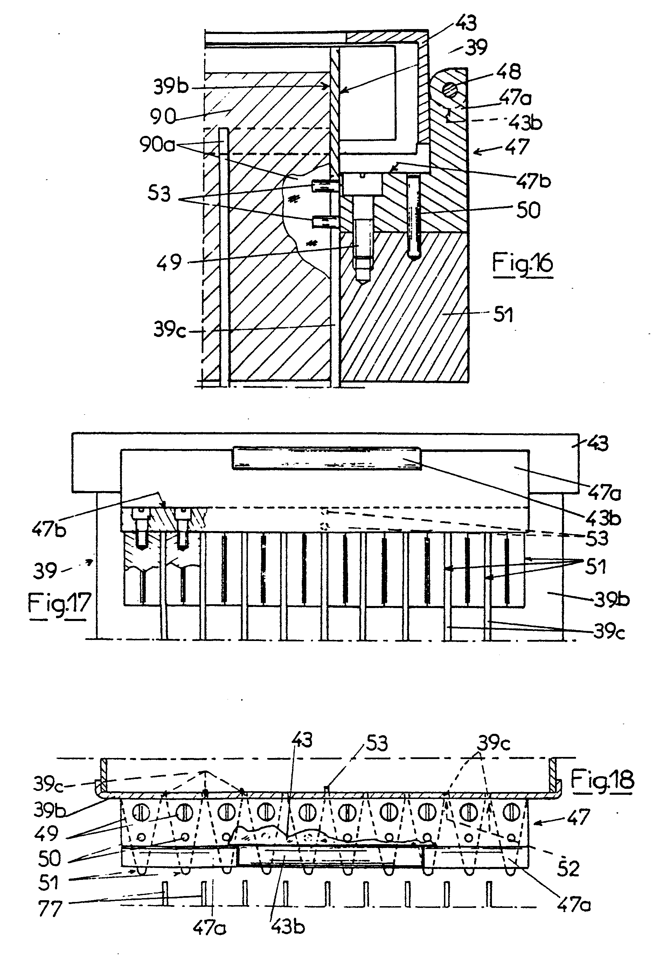

Lorsque le panier est installé dans le support de panier 38, sa partie supérieure est également immobilisée par un cadre de verrouillage 43 articulé, au moyen d'un axe horizontal 44, sur le sommet d'un bouclier de protection 45 fixé, par sa base, sur la plaque 2. Ce bouclier est disposé face au côté du support de panier opposé au côté de ce dernier qui est placé en regard du poste de découpage ou des moyens de découpe. Il comporte une paroi frontale 45a disposée face au support de panier et au poste de découpe, et deux parois latérales 45b. Le cadre de verrouillage pivotant 43 porte un organe de blocage avantageusement constitué par une came 46 dont l'axe est solidaire d'un bouton de manoeuvre 46a. Dans la position de verrouillage, cette came vient en appui contre l'une des faces verticales du panier (figure 15).

Le cadre de verrouillage supérieur 43 est pourvu d'une ouverture 43 découvrant l'ouverture supérieure du panier.

D'autre part, le côté du cadre de verrouillage opposé à son articulation, porte un guide destiné à centrer la ou les lames du dispositif ou outil de découpe dans les portions supérieures des fentes verticales de guidage 39c du panier, lors de leur introduction dans ces dernières.

Ce guide comprend un support 47 ayant sensiblement la forme d'une cornière et articulé, par le sommet de l'une de ses ailes 47a, au moyen d'un axe 48, sur un charnon 43b solidaire du rebord du cadre de verrouillage 43.

Sur la face inférieure de l'aile 47b perpendiculaire à l'aile 47a du support, est fixé, par exemple au moyen de vis 49 et de goupilles 50, une pluralité de dents de guidage 51 constituées par des blocs prismatiques ayant une section en forme de triangle isocèle dont le sommet est orienté en direction du poste ou du dispositif de découpe.

Les fonds d'entre-dents 52 sont alignés avec les fentes verticales de guidage 39c de la paroi latérale 39b du panier disposée face au dispositif de guidage ainsi réalisé, et leur nombre correspond à celui desdites fentes. Afin de permettre un parfait centrage des fonds d'entre-dents 52 et des fentes 39b, le dispositif de guidage est pourvu d'un moyen de positionnement qui peut être constitué par deux goupilles superposées 53 portées par la face du support 47 disposée en regard du panier, et destinées à se loger dans l'extrémité supérieure de l'une desdites fentes. Ce moyen de positionnement est avantageusement placé dans la partie médiane du support 47.

La machine comprend également un dispositif presseur destiné à assurer l'embrochement et la pression des tranches de viande ou autre produit alimentaire disposées dans le panier de découpage. Ce dispositif presseur comprend un bloc presseur proprement dit 54 pourvu de trous 54b le traversant dans son épaisseur et de diamètre à peine supérieur au diamètre extérieur des tubes d'embrochement 18 qui doivent pouvoir coulisser dans lesdits trous. L'axe verticale des trous 54b est aligné avec celui des tiges de soutien et d'éjection 30 des tubes d'embrochement 18 et des canons de guidage et d'entraînement 8 lesquels sont disposés coaxialement; le nombre et la disposition des trous 54b, des tiges 30, des tubes 18 et des canons 8 étant identiques.

Les trous alignés 54b, 90b, 40b, 39b, 5b, 6b, les canons d'entraînement 8, les tubes d'embrochement 18 et les tiges de soutien et d'éjection 30 sont disposés en rangs parallèles, et leur nombre détermine la capacité d'embrochement de la machine, laquelle correspond à la capacité du bac de découpage. Ainsi, pour l'obtention de 100 brochettes de viande, de poisson et/ou autres produits alimentaires, ce nombre sera de 100 répartis en 10 rangs de 10.

Le bloc presseur peut être exécuté de manière identique au couvercle de compression 90 et comporter, par conséquent, dans ce cas, une pluralité de gorges perpendiculaires régulièrement espacées s'ouvrant dans sa face inférieure, lesdites gorges étant disposées en regard des gorges 40a dont est pourvue la face supérieure du plateau de réception flottant 40.

Le bloc presseur 54 est fixé à la partie inférieure d'un ensemble mobile en translation verticale. Cet ensemble mobile comprend quatre arbres verticaux de guidage 55 fixés, par leurs extrémités opposées, d'une part, à une plaque-entretoise 56 et, d'autre part, à un plateau inférieur 57 lui-même fixé sur la face supérieure du bloc-presseur. Ce plateau 57 déborde, par sa périphérie, du bloc-presseur 54 et sa partie débordante 57a disposée au-dessus et à distance de la face de pression dudit bloc-presseur, constitue une butée périphérique limitant l'enfoncement de ce dernier à l'intérieur du panier de découpage. Les arbres de guidage 55 sont montés avec une aptitude de coulissement dans des douilles à axe vertical et, de préférence, dans des douilles à billes 58 portées par une potence horizontale 59 articulée, par l'une de ses extrémités; sur le sommet d'une colonne 60 fixée, par sa base, sur la plaque 2. Cette potence porte également, dans sa partie médiane, un vérin pneumatique 61 disposé verticalement et dont la tige 61a est assujettie au plateau inférieur 57 soutenant le bloc presseur 54.

On comprend que la mise en extension du vérin 61 entraîne une translation vers le bas du bloc presseur 54, tandis que l'escamotage de ladite tige provoque la remontée dudit bloc presseur.

La potence 59 est montée avec une aptitude de pivotement dans le plan horizontal et sont extrémité libre 59a est agencée pour pouvoir se verrouiller sur le sommet 62a adapté de manière complémentaire d'une seconde colonne 62 portée par la plaque 2, de façon à empêcher la flexion de l'articulation et de ladite potence, notamment lors des opérations de pressage. Les colonnes 60 et 62 sont disposées de part et d'autre du support de panier 38 et placées sur une ligne diagonale par rapport au quadrilatère constitué par la portion avant de la plaque supérieure 2.

Le montage pivotant de la potence 59 autour d'un axe vertical permet l'escamotage du dispositif presseur par effacement latéral, les extrémités agencées de manière complémentaire de ladite potence et de la colonne d'équilibrage 62 venant en contact lorsque le bloc presseur 54 est à la verticale du panier de découpage.

La potence 59 est équipée d'une poignée de manoeuvre (non représentée). La machine selon la présente invention comprend encore un poste de découpe ou tranchage automatique des couches superposées de viandes et/ou autres produits alimentaires, embrochées, ou non, logées à l'intérieur du bac de découpage.

Le dispositif de découpe proprement dit est supporté par un chariot 63 équipé, latéralement, de douilles à billes 64 permettant son déplacement sur un chemin de guidage horizontal constitué par deux arbres lisses parallèles 65 portés par des supports 66 fixés sur la plaque supérieure 2, lesdits douilles coulissant sur lesdits arbres horizontaux. Le chariot 63 est rigidement solidaire d'un écrou à billes 67 immobilisé en rotation. Cet écrou coopère avec un arbre fileté horizontal 68 supporté par des paliers 69 également fixés sur la plaque 2. L'arbre vis 68 est entraîne en rotation au moyen d'un motoréducteur 70 fixé à l'extrémité arrière de ladite plaque et accouplé à l'une des extrémités dudit arbre-vis, par l'intermédiaire d'un limiteur de couple 91.

On comprend que la mise en rotation de l'arbre-vis 68 provoque l'avance ou le recul du chariot 63, c'est-à-dire l'avance ou le recul de l'ensemble de découpe, suivant le sens de rotation.

D'autre part, le dispositif de découpe proprement dit est logé dans un carter 71 équipé latéralement, de douilles à billes (non représentées) à axe vertical portées par des supports 92 rigidement solidaires dudit carter et montées avec une aptitude de coulissement sur des arbres lisses verticaux 72 rigidement fixés, d'une part, par leur extrémité inférieure, sur le chariot mobile 63 et, d'autre part, par leur extrémité supérieure, à une potence ou traverse horizontale 73 soutenue par des montants 74 eux-mêmes fixés, par leur base, audit chariot.

La potence 73 porte, dans sa partie médiane, un vérin pneumatique à simple effet 75 disposé verticalement et dont la tige 75a est fixée sur la partie supérieure du carter 71 portant le dispositif de découpe.

Lorsque le vérin est en position d'extension, le dispositif de découpe est en position basse, la rentrée de la tige dudit vérin assurant l'élévation dudit dispositif de découpe qui, en cours de travail, redescend sous l'effet de la pesanteur.

Le dispositif de découpe comprend un support de couteaux 76 agencé pour recevoir une pluralité de couteaux 77 dont le nombre correspond à celui des fentes verticales 39c dont sont pourvues les parois latérales 39b du panier 39.

Ces couteaux sont constitués par des lames coupantes et sont fixés horizontalement et symétriquement, par l'intermédiaire de leur partie postérieure, dans le support de couteaux 76. De manière intéressante, ce dernier est exécuté en deux éléments séparables, soit un porte-lames amovible 76a ayant un profil en queue d'arronde et s'engageant, par coulissement, dans un bloc-support 76b formant glissière, une broche 78 traversant des perçages transversaux ménagés dans lesdits porte-lames et bloc-support, permettant de verrouiller ces derniers en position d'assemblage.

Ce mode d'exécution du support de couteaux permet un changement rapide de l'ensemble des lames coupantes, par exemple pour les remplacer par un ensemble de lames mieux affutées ou par un ensemble comprenant un nombre plus ou moins important de lames, sans arrêt prolongé du fonctionnement de la machine.

Le porte-lames 76a comporte des fentes verticales 76c pour le logement de la portion arrière des lames 77 lesquelles sont assujetties, de manière amovible, audit porte-lames, au moyen d'une broche 79 traversant un perçage transversal ménagé dans ce dernier, au droit desdites fentes, et un trou que présente ladite portion arrière de chaque lame coupante. D'autre part, les lames coupantes sont immobilisées en position horizontale par une plaque de maintien 80 fixée, à

l'aide de vis, sur la face inférieure du porte-lames 76a.

Des vis 81 et 82 se vissant dans des taraudages que comportent le bloc-support 76b et le porte-lames 76a, peuvent être placées en appui contre les broches 78 et 79 respectivement, afin d'immobiliser ces dernières en position de verrouillage.

Le support de couteaux 76 est solidaire de douilles à billes 83 montées avec une aptitude de coulissement sur des arbres lisses horizontaux 84 portés par des éléments rigidement solidaires du carter 71, et logés à l'intérieur de ce dernier.

Sur le support de couteaux 76 est articulée, par l'une de ses extrémités, une bielle 85 articulée, par son extrémité opposée, sur un plateau manivelle 86 entraîné en rotation par un motoréducteur 87 logé dans le carter 71.

On comprend que la rotation du plateau manivelle 86 engrendre un mouvement horizontal alternatif du support de couteaux 76 et, par conséquent, des lames coupantes 77, ce mouvement de va-et-vient assurant l'action de découpage. Le chariot 63 est solidaire, latéralement, de joues de protection 88 qui, lorsque ledit chariot avance en direction du panier d'embrochement et de découpe, viennent se placer de chaque côté de ce dernier.

Le fonctionnement de la machine pour la préparation automatique des brochettes qui vient d'être décrit est le suivant:

Le panier d'embrochement et de découpage 39 est placé sur le plan supérieur de travail et il est positionné dans le support de panier 38. Le cadre de verrouillage 43 est rabattu autour de la partie supérieure du panier lequel se trouve immobilisé au moyen de la came de blocage 46 portée par ledit cadre.

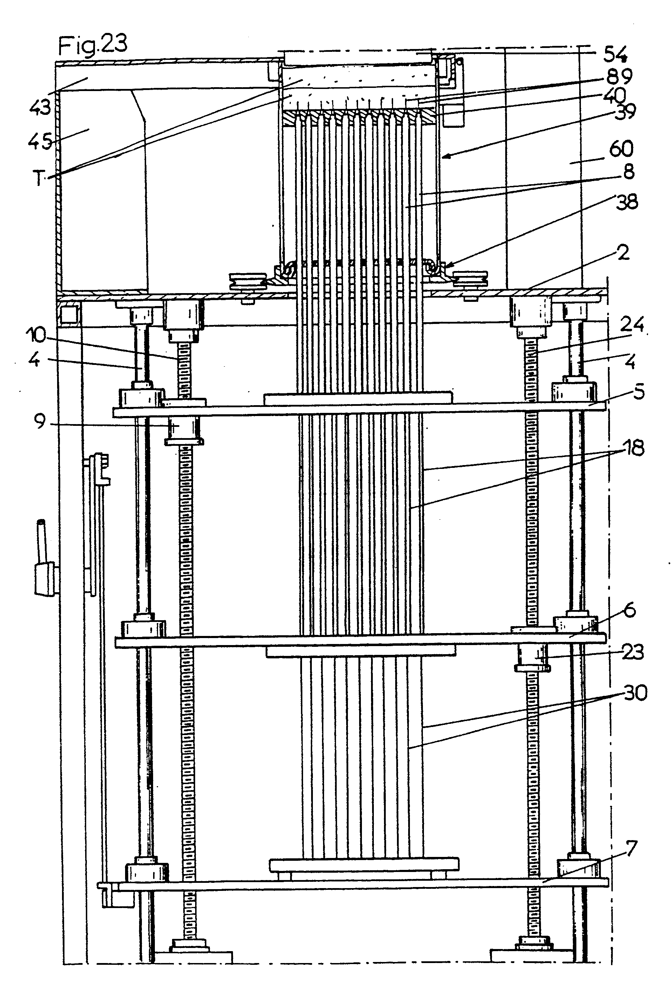

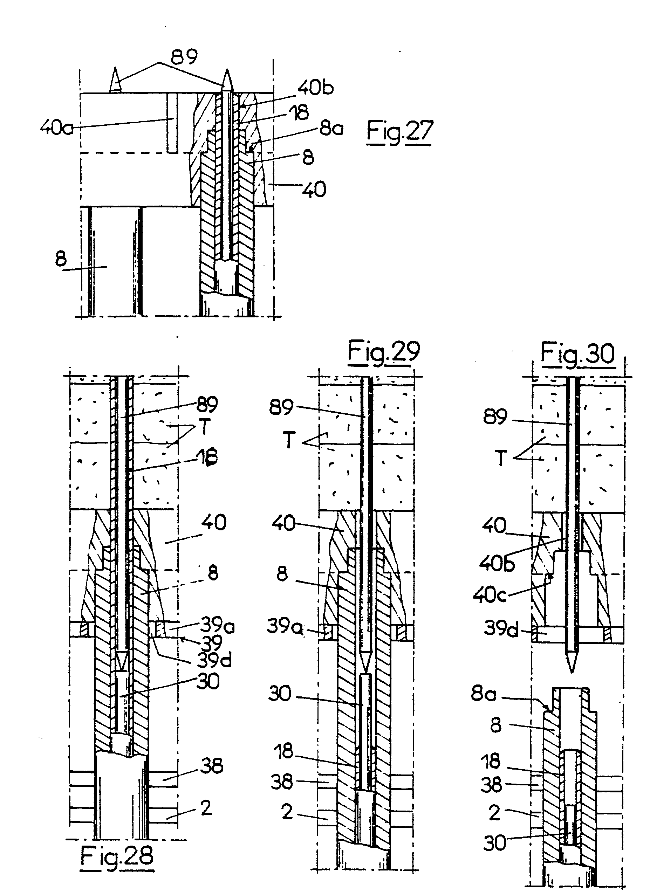

Les plateaux mobiles 5, 6 et 7 sont placés en position haute (figure 23). Les canons d'entraînement et de guidage 8 solidaires du plateau supérieur 5 traversent le fond 39a du panier 39 et supportent le plateau flottant 40 qu'ils maintiennent soulevé dans la partie supérieure dudit panier. Les piques 89 sont introduites dans la portion supérieure des tubes d'embrochement 18 et reposent, par leur extrémité inférieure, sur l'extrémité supérieure des tiges de soutien et d'éjection 30. L'extrémité supérieure pointue des piques 89 dépasse légèrement de la surface supérieure du plateau flottant 40 et, également de l'extrémité supérieure effilée ou chanfreinée des tubes d'embrochement 18 (figure 27).

L'opérateur dispose un premier "lit" formé d'une ou plusieurs tranches T de viande ou de poisson et/ou de légumes ou autres produits alimentaires, dans la partie supérieure du panier, et actionne ensuite le dispositif presseur. Pour cela, à l'aide de la poignée équipant la potence 59, il amène le bloc presseur 54 au-dessus du panier et, de l'autre main, il commande la mise en extension du vérin 61 assurant la descente dudit bloc-presseur. On observe que, de la sorte, les deux mains de l'opérateur se trouvent occupées pour des raisons de sécurité, durant le fonctionnement du dispositif presseur.

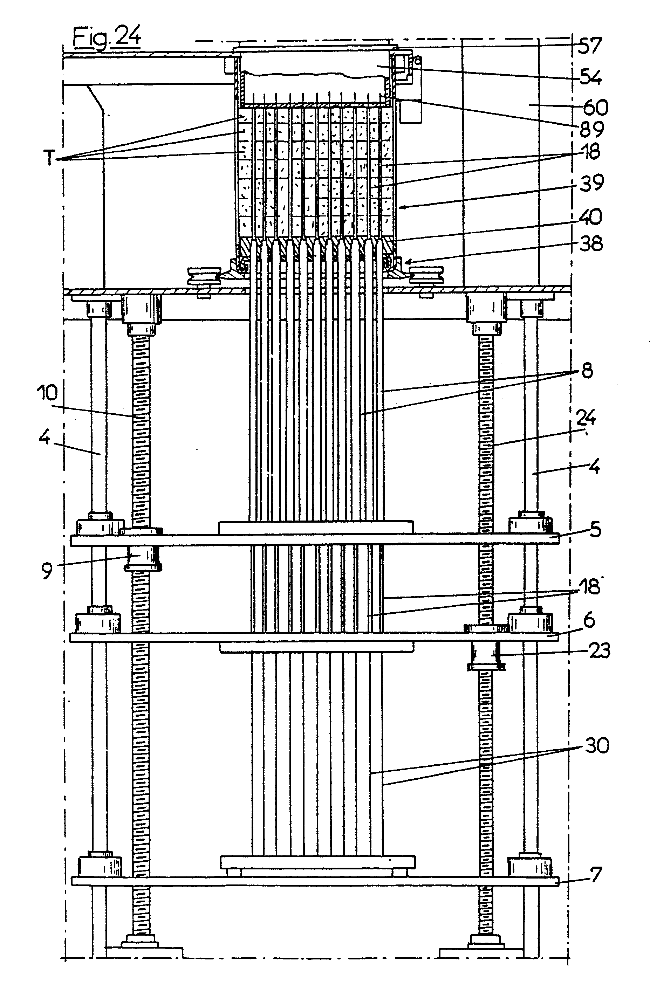

Sous la pression exercée par le bloc-presseur 54, la couche de viande ou autre produit alimentaire est poussée vers le bas et elle est embrochée, lors de sa descente, sur les tubes d'embrochement 18 qui restent fixes, ainsi que les piques 89 et les tiges de soutien et d'éjection 30, les plateaux intermédiaire 6 et inférieur 7 restant, en effet, immobiles. Simultanément, la poussée du plateau presseur entraîne la descente du plateau flottant 40 des canons d'entraînement 8 qui coulissent sur les tubes d'embrochement 18, et du plateau supérieur 5, grâce à la roue libre 17. Le dispositif presseur est ensuite relevé et escamoté latéralement, puis on dispose un nouveau "lit" de viande dans la partie supérieure du bac de découpage et on l'embroche à l'aide dudit dispositif presseur, de la manière précédemment indiquée; et ainsi de suite, jusqu'à ce que le plateau 40 atteigne le fond du panier qui se trouve alors totalement rempli (figures 24 et 28). A ce moment là, le plateau supérieur 5 est dans une position basse, tandis que les plateaux intermédiaire 6 et inférieur 7 sont toujours en position haute.

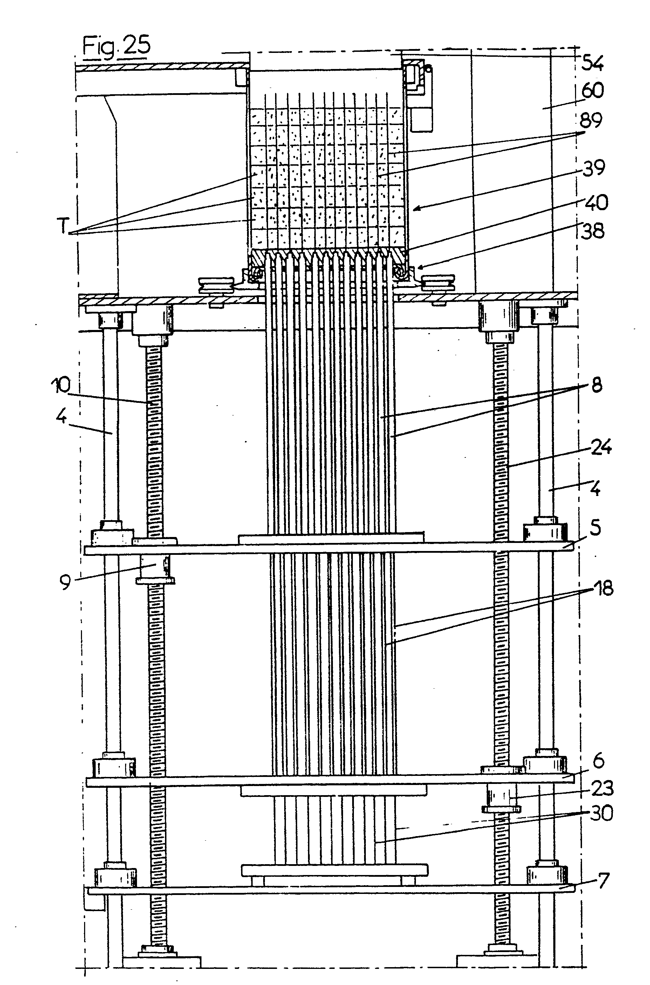

Le couvercle de compression 90 est alors mis en place dans la partie supérieure du panier, puis le plateau intermédiaire 6 descend jusqu'en position basse sous l'action du motoréducteur 25 et du système vis-écrou 24—23 (figure 25). Lors de ce mouvement, les tubes d'embrochement 18 sur lesquels est embroché l'empilage de viande, descendent et, en coulissant sur les tiges de soutien et d'éjection 30 immobilisées, se retirent de cet empilage qui se trouve retenu par et sur le plateau 40 (figure 29). Toutefois, les piques 89 logées dans la portion supérieure des tubes d'embrochement, n'accompagnent pas ces derniers dans leur translation descendante. En effet, lesdites piques sont éjectées des tubes d'embrochement, par la présence des tiges 30 immobilisées, sur l'extrémité supérieure desquelles elles reposent et, de ce fait, elles demeurent seules dans l'empilage de viande reposant sur le plateau 40. Les tranches superposées de viande et/ou autre produit alimentaire se trouvent donc uniquement embrochées par les piques 89, après le retrait des tubes d'embrochement. Une fois ces derniers retirés, d'opérateur, en pressant sur le couvercle de compression 90, resserre l'empilage de viande autour des piques.

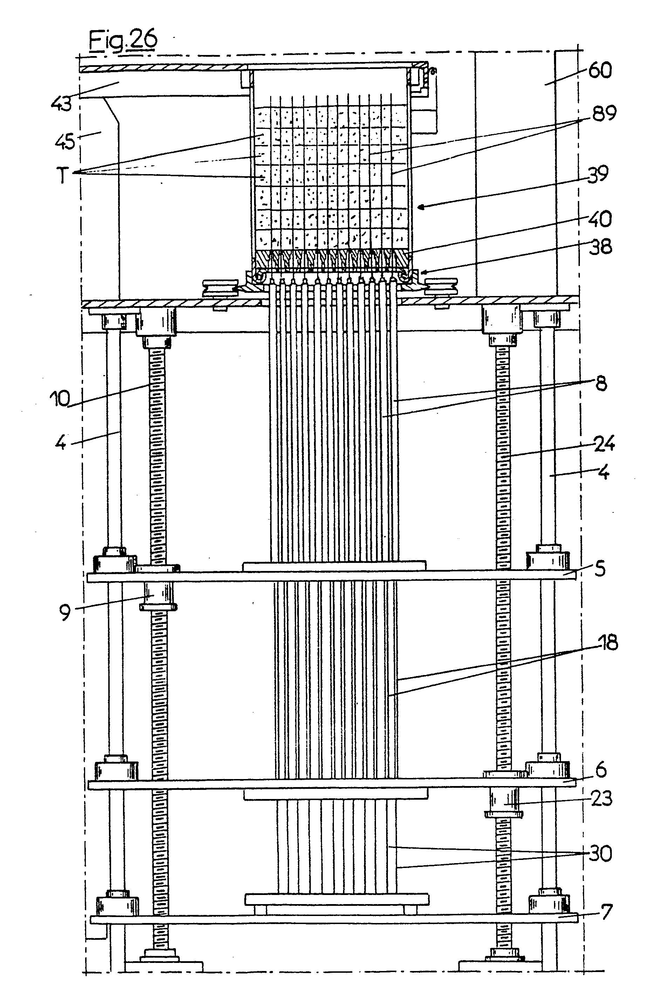

Le plateau supérieur 5 est descendu dans sa position la plus basse au moyen de sa motorisation, tandis que la plateau inférieur est abaissé à l'aide de la tige de manoeuvre 31, ce qui a pour effet de dégager le sommet des canons d'entraînement 8 et des tiges 30 de la partie inférieure du panier (figures 26 et 30).

Le dispositif de découpe est placé en position haute sous l'action du vérin 75 et l'ensemble de découpe se déplace en direction du panier grâce au système de vis-écrou 67—68 actionné par le motoréducteur 70, l'introduction des lames de coupe 77 dans les fentes 39c du panier et dans les gorges 90a du couvercle de compression 90 étant facilitée par les dents de guidage 51.

Lors de l'avance de l'ensemble de découpage, les joues latérales de protection 88 viennent entourer le panier en formant ainsi, avec le bouclier 45 et le cadre supérieur 43, un capot de protection assurant la sécurité dès que les lames sont en service.

Lorsque l'ensemble de découpage arrive en fin de course, le motoréducteur 87 est mis en route et assure l'entraînement des lames coupantes du dispositif de découpage suivant un mouvement de va-et-vient assurant un premier découpage des couches superposées de viande et/ou autre produit alimentaire embrochées logées dans le panier, selon des lignes parallèles, ledit dispositif de découpage descendant librement sur l'effet de son propre poids, à mesure que progresse l'action de découpe, jusqu'à ce que lesdites lames pénètrent dans les gorges 40a du plateau 40. Lorsque la position basse est atteinte, le moteur s'arrête et l'ensemble de découpage recule pour dégager les lames du panier.

Le cadre supérieur de verrouillage 43 est déverrouillé et basculé pour libérer la partie haute du panier et ce dernier est ensuite pivoté sur 90° de façon à présenter l'une de ses parois perpendiculaires face au dispositif de découpage. Le cadre supérieur 43 est de nouveau rabattu et verrouillé sur la partie supérieure du panier.

Le dispositif de découpage se replace en position haute, l'ensemble de découpage avance de nouveau en direction du panier et ledit dispositif effectue un deuxième découpage dans une direction perpendiculaire à celle du premier, après quoi ledit ensemble recule pour dégager les lames du panier. Ce dernier est alors retiré pour évacuer les brochettes confectionnées. L'opérateur installe un nouveau panier vide et replace les plateaux supérieur 5, intermédiaire 6 et inférieur 7 en position haute initiale, et introduit ensuite de nouvelles piques 89 dans la partie supérieure des tubes d'embrochement 18. La machine est ainsi prête pour un nouveau cycle d'embrochage et de découpe.

Le fonctionnement des différents postes de la machine est avantageusement automatisé au moyen d'un appareillage électronique et électromécanique connu en soi. Pour ne pas compliquer inutilement la description et les dessins, on ne décrit pas cet appareillage qui comprend notamment une pluralité de détecteurs commandant la mise en marche et l'arrêt des motoréducteurs ou le fonctionnement des vérins lorsque certains des organes des différents postes de la machine occupent des positions déterminées.

**Revendications**

1. Embrocheur pour la préparation de brochettes de produits alimentaires tels que viande, légumes, fruits, poisson, caractérisé en ce qu'il comporte:

— un plateau de réception (40) pourvu de trous (40b) de passage, pour recevoir au moins une couche de produits alimentaires,
— un organe presseur (54, 90) susceptible d'être appliqué sur ladite couche reposant sur ledit plateau de réception (40),
— une pluralité de tubes d'embrochement (18) présentant un axe longitudinal et comportant au moins une portion d'extrémité susceptible de recevoir intérieurement, coaxialement, avec possibilité de coulissement relatif coaxial, une petite broche ou pique (89), chacun des tubes d'embrochement (18) étant lui-même susceptible de coulissement longitudinal coaxial dans un trou respectif (40b) du plateau de réception (40),
— des moyens pour provoquer un déplacement relatif longitudinal des tubes d'embrochement (18) et du plateau de réception (40), pour alternativement introduire les tubes d'embrochement (18) par ladite portion d'extrémité dans une position entre le plateau de réception (40) et l'organe presseur (54, 90), moyennant un coulissement des tubes d'embrochement (18) dans un sens déterminé dans les trous (40b) du plateau de réception (40), puis dégager les tubes d'embrochement (18) moyennant un coulissement en sens inverse dudit sens déterminé desdits tubes (18) et dudit plateau (40),
— des moyens (30) pour immobiliser lesdits petites broches ou piques (89) à l'encontre d'un coulissement dans les tubes d'embrochement (18) dans ledit sens inverse, lesdits moyens (30) permettant de laisser les petites broches ou piques (89) libres vis-à-vis d'un coulissement dans les tubes d'embrochement (18) dans ledit sens déterminé.

2. Embrocheur selon la revendication 1, caractérisé en ce que l'axe longitudinal des tubes d'embrochement (18) est vertical.

3. Embrocheur selon l'une quelconque des revendications 1 et 2, caractérisé en ce que l'organe presseur (54, 90) est disposé à un niveau supérieur à celui du plateau du réception (40), en ce que ladite portion d'extrémité des tubes d'embrochement (18) est, une portion supérieure, et en ce que ledit sens détermine est ascendant.

4. Embrocheur selon l'une quelconque des revendications 1 à 3, caractérisé en ce que les tubes d'embrochement (18) sont mobiles longitudinalement.

5. Embrocheur suivant la revendication 4, caractérisé en ce que les tubes d'embrochement (18) sont portés par un plateau commun (6) mobile longitudinalement et disposé à l'opposé de l'organe presseur (54, 90) par rapport au plateau de réception (40).

6. Embrocheur suivant la revendication 5, caractérisé en ce que les mouvements du plateau (6) portant les tubes d'embrochement (18) sont assurés au moyen d'un dispositif de vis-écrou (23—24) dont la vis (24) est entraînée en rotation par un motoréducteur (25).

7. Embrocheur suivant l'une quelconque des revendications 5 et 6, caractérisé en ce que les tubes d'embrochement (18) sont portés par une plaque (6a) fixée, de manière amovible, sur le plateau mobile (6).

8. Embrocheur selon l'une quelconque des revendications 5 à 7, caractérisé en ce que la face du plateau mobile (6) tournée vers le plateau de réception (40) ou de la plaque (6a) fixée de manière amovible sur le plateau mobile (6), comporte des rainures parallèles (6c) tandis que la face opposée dudit plateau ou de ladite plaque est pourvue de rainures parallèles (6d) disposées de manière perpendiculaire aux précédentes, et en ce que des barrettes de verrouillage (19) sont logées avec une aptitude de translation axiale dans lesdites rainures et comportent latéralement des échancrures (19a) séparées par des languettes de verrouillage (19b) destinées à coopérer avec des gorges annulaires (18b) que comportent des douilles de montage (18a) solidaires de l'extrémité inférieure des tubes d'embrochement (18) lesquels sont positionnés, de façon amovible, dans des trous (6b) ménagés dans l'épaisseur dudit plateau ou de ladite plaque, à l'intersection des bandes saillantes (6g, 6h) séparant les rainures (6c, 6d), ces trous ayant un diamètre plus important que la largeur desdites bandes saillantes.

9. Embrocheur selon l'une quelconque des revendications 1 à 8, caractérisé en ce que le plateau de réception (40) est monté avec une latitude de déplacement longitudinal.

10. Embrocheur selon la revendication 9, caractérisé en ce qu'il comporte une pluralité de canons d'entraînement (8) mobiles longitudinalement et portés par un plateau (5) mobile longitudinalement, lesdits canons d'entraînement étant destinés à supporter le plateau de réception (40).

11. Embrocheur selon la revendication 10, en combinaison avec l'une quelconque des revendications 5 à 8, caractérisé en ce que le plateau (5) portant les canons d'entraînement (8) est intercalé entre le plateau de réception (40) et le plateau portant les tubes d'embrochement (18) et pourvu de trous (5b) pour le passages des tubes d'embrochement (18).

12. Embrocheur selon l'une quelconque des revendications 10 et 11, caractérisé en ce que les mouvements longitudinaux du plateau (5) supportant les canons d'entraînement (8) sont assurés au moyen de dispositifs de vis-écrou (9—10) sont la vis (10) est entraînée en rotation par un motoréducteur (11), de préférence par l'intermédiaire d'un limiteur de couple (16), au moyen d'une roue libre (17) autorisant la translation longitudinale dudit plateau (5) sous un effort de poussée exercé dans ledit sens inverse.

13. Embrocheur selon l'une quelconque des revendications 10 à 12, caractérisé en ce que les canons d'entraînement (8) sont portés par une plaque (5a) fixée, de manière amovible, sur le plateau correspondant (5).

14. Embrocheur selon l'une quelconque des revendications 1 à 13, caractérisé en ce que lesdits moyens (30) pour immobiliser les petites broches ou piques (89) à l'encontre d'un coulissement dans les tubes d'embrochement (18) dans ledit sens inverse comportent des tiges (30) de soutien et d'ejection des petites broches ou piques (89), montées avec latitude de coulissement longitudinal relatif à l'intérieur des tubes d'embrochement (18).

15. Embrocheur selon la revendication 14, caractérisé en ce que les tiges de soutien et d'éjection (30) sont montées avec une aptitude de translation longitudinale.

16. Embrocheur selon la revendication 15, caractérisé en ce que les tiges de soutien et d'éjection (30) sont portées par un plateau (7) mobile suivant l'axe longitudinal des tubes d'embrochement (18).

17. Embrocheur selon la revendication 16 en combinaison avec l'une quelconque des revendications 5 à 8, en ce que le plateau mobile (6) portant les tubes d'embrochement (18) est situé entre le plateau de réception (40) et le plateau (7) portant les tiges de soutien et d'éjection (30) et doté de trous (6b) pour le passage des tiges (30) de soutien et d'éjection.

18. Embrocheur selon l'une quelconque des revendications 14 à 17, caractérisé en ce que les mouvements longitudinaux du plateau (7) portant les tiges de soutien et d'éjection (30) sont obtenus au moyen d'une tige de monoeuvre (31) rigidement solidaire d'un moyeu (32) monté tournant dans un palier (33) porté par un élément (1e) du bâti (1) dudit embrocheur, ledit moyeu étant, d'autre part, rigidement solidaire de l'une des extrémités d'un levier (34) dont l'extrémité opposée est articulée à l'une des extrémités d'une bielle (35) elle-même articulée, par son extrémité opposée, à un organe d'attache (26) solidaire dudit plateau (7).

19. Embrocheur selon l'une quelconque des revendications 16 à 18, caractérisé en ce que les tiges de soutien et d'éjection (30) sont portées par une plaque (7a) fixée, de manière amovible, sur la plateau correspondant (7).

20. Embrocheur selon l'une quelconque des revendications 1 à 19, caractérisé en ce que l'organe presseur est constitué par un couvercle de compression (90).

21. Embrocheur selon la revendication 20, caractérisé en ce que le couvercle de compression (90) comporte une pluralité de trous (90b) le traversant dans son épaisseur.

22. Embrocheur selon l'une quelconque des revendications 1 à 19, caractérisé en ce que l'organe presseur comprend un bloc-presseur (54) pourvu d'une pluralité de trous (54b) dont les axes sont alignés avec les axes des tubes d'embrochement (18) et monté avec une aptitude de translation longitudinale.

23. Embrocheur selon la revendication 22, caractérisé en ce que ledit bloc-presseur (54) est aussi monté avec une latitude de déplacement transversal, permettant son escamotage par effacement latéral.

24. Embrocheur selon la revendication 23, caractérisé en ce que le bloc presseur (54) est porté par une potence (59) articulée, par l'une de ses extrémités, sur une colonne fixe (60), l'extrémité libre de ladite potence étant agencée pour pouvoir se verrouiller sur une zone (62a), agencée de manière complémentaire, d'une seconde colonne fixe (62), lesdites colonnes (60, 62) étant disposées de part et d'autre du plateau de réception (40).

25. Embrocheur selon la revendication 24, caractérisé en ce que le bloc presseur (54) est solidaire d'arbres longitudinaux de guidage (55) montés avec une aptitude de coulissement dans des douilles à axe longitudinale (58) portées par la potence (59).

26. Embrocheur selon la revendication 25, caractérisé en ce qu'il comporte des moyens de butée (57a) limitant le mouvement du bloc presseur (54) dans le sens d'un rapprochement par rapport au plateau de réception (40).

27. Embrocheur selon l'une quelconque des revendications 1 à 26, caractérisé en ce que le plateau de réception (40) est bordé de parois longitudinales (39b) d'un panier d'embrochement et de découpage (39), munies de fentes longitudinales (39c) de guidage de lames de couteau.

28. Embrocheur selon la revendication 27, caractérisé en ce que lesdites parois sont fixes.

29. Embrocheur selon la revendication 28, caractérisé en ce que le panier d'embrochement et de découpage (39) comporte un fond fixe (39a) pourvu de trous (39d) de passage des tubes d'embrochement (18), à l'opposé de l'organe presseur (54, 90) par rapport au plateau de réception (40).

30. Embrocheur selon l'une quelconque des revendications 27 à 29 en combinaison avec l'une quelconque des revendications 20 et 21, caractérisé en ce que le couvercle de compression (90) est susceptible de se positionner dans une partie du panier d'embrochement et de découpage (39).

31. Embrocheur selon la revendication 30, caractérisé en ce que le couvercle de compression comporte des gorges perpendiculaires (90a) ménagées dans sa face inférieure.

32. Embrocheur selon l'une quelconque des revendications 27 à 29, en combinaison avec la revendication 26, caractérisé en ce que le dispositif presseur comporte une butée périphérique (57a) disposée en retrait par rapport à la face de pression du bloc-presseur (54), afin de limiter l'enfoncement de ce dernier à l'intérieur du panier de découpage (39).

33. Embrocheur selon l'une quelconque des revendications 27 à 32, caractérisé en ce qu'il comporte des moyens de positionnement du panier de découpage (39), lesdits moyens de positionnement étant constitués par un support de panier (38) monté avec une aptitude de rotation sur au moins 90° autour d'un axe longitudinal, des moyens (38e—41, 43) permettant d'immobiliser ledit support de panier et/ou ledit panier de découpage dans la position souhaitable.

34. Embrocheur selon la revendication 33, dont les moyens permettant d'immobiliser le panier de découpage (39) comprennent un cadre de verrouillage (43) pivotant pourvu d'un organe de blocage (46) et doté d'une ouverture découvrant une ouverture dudit panier à l'opposé du plateau de réception (40), caractérisé en ce que l'un des côtés de ce cadre de verrouillage porte un guide (47—51) destiné à centrer une ou des lames (77) d'un dispositif ou outil de découpage dans des portions correspondantes des fentes de guidage (39c) des parois latérales (39b) du panier, lors de son ou de leur introduction dans ces dernières.

35. Embrocheur selon la revendication 34, caractérisé en ce que le cadre de verrouillage (43) est articulé sur un bouclier de protection (45) placé face au support de panier (38).

36. Embrocheur selon l'une quelconque des revendications 27 à 35, caractérisé en ce qu'il comporte un poste de découpage ou tranchage des couches superposées de viande et/ou autres produits alimentaires logées à l'intérieur du panier de découpage (39) est reposant sur le plateau de réception (40), ce poste de découpage comprenant un dispositif de découpe pourvu d'une pluralité de lames coupantes (77) susceptibles de s'engager dans les fentes longitudinales de guidage (39c) des parois latérales (39b) du panier (39), et en ce que ledit dispositif de découpe est porté par un chariot (63) monté avec une latitude de déplacement transversal de rapprochement ou d'éloignement par rapport au panier (29).

37. Embrocheur selon la revendication 36, caractérisé en ce qu'il comporte des moyens (67, 68, 70) d'entraînement du chariot (63) en vue dudit déplacement transversal.

38. Embrocheur selon la revendication 37, caractérisé en ce que les mouvements transversaux dudit chariot (63) sont assurés par un système de vis-écrou (68—67) dont la vis (67) est entraînée en rotation par un motoréducteur (70).

39. Embrocheur selon l'une quelconque des revendications 36 à 38, caractérisé en ce que le dispositif de découpe est monté avec une aptitude de déplacement longitudinal par rapport au chariot (63) et en ce que les lames coupantes sont portées par un support de couteaux (76) accouplé à des moyens moteurs (87) pour accomplir, avec les lames (77), un mouvement transversal alternatif.

40. Embrocheur selon la revendication 39, caractérisé en ce que le dispositif de découpe est monté avec une aptitude de coulissement sur des arbres longitudinaux (72) rigidement solidaires du chariot (63).

41. Embrocheur selon la revendication 40 en combinaison avec l'une quelconque des revendications 2 et 3, caractérisé en ce que les arbres longitudinaux (72) solidaires du chariot (63) sont également fixés à une potence transversale (73) qui porte, dans sa partie médiane, un vérin (75) disposé longitudinalement et dont la tige (75a) est fixée à un carter (71) du dispositif de découpe, ledit vérin assurant les mouvements ascendants dudit dispositif de découpe dont les mouvements descendants sont assurés par gravité.

42. Embrocheur suivant l'une quelconque des revendications 39 à 41, caractérisé en ce que le support de couteaux (76) est suspendu au moyen de douilles (83) montées avec une aptitude de coulissement sur des arbres lisses transversaux (84) portés par des éléments rigidement solidaires d'un carter (71) du dispositif de découpe.

43. Embrocheur selon l'une quelconque des revendications 36 à 42, caractérisé en ce que le support de couteaux (76) comprend deux éléments séparables, soit un porte-lames amovible (76a) logé, avec une aptitude de coulissement, dans un bloc-support (76b) formant glissière et une broche (78) traversant des perçages transversaux ménagés dans lesdites porte-lames et bloc-support, assurant leur assemblage.

44. Embrocheur selon l'une quelconque des revendications 36 à 43, caractérisé en ce que le chariot (63) est solidaire, latéralement, de joues de protection (88) qui, lorsque ledit chariot avance en direction du panier d'embrochement et de découpe (39), viennent se placer de chaque côté de ce dernier.

**Patentansprüche**

1. Aufspießmaschine zum Bereiten von Spießchen aus Nahrungsmitteln wie Fleisch, Gemüse, Obst, Fisch, dadurch gekennzeichnet, daß sie umfaßt

— ein mit Durchgangslöchern (40b) versehenes Aufnahmetablett (40) zur Aufnahme wenigstens einer Schicht von Nahrungsmitteln,
— einen Niederdrücker (54, 90), der auf die auf dem Aufnahmetablett (40) aufruhende Schicht aufsetzbar ist,
— eine Vielzahl von langgestreckten Aufspießrohren (18) mit wenigstens einem Endstück, in dessen Innern gleichachsig relativ verschiebbar eine kleine Nadek oder Bratspieß (89) gleichachsig aufnehmbar ist, wobei jedes Aufspießrohr (18) selbst in einem zugehörigen Loch (40b) des Aufnahmetabletts (40) in Längsrichtung gleichachsig verschiebbar ist,
— Mittel zum Erzeugen einer Relativlängsbewegung der Aufspießrohre (18) und des Aufnahmetabletts (40) zum wechselweisen Einführen der Aufspießrohre (18) mit ihrem Endstück bis in eine Stellung zwischen dem Aufnahmetablett (40) und dem Niederdrücker (54, 90) mittels einer Verschiebung der Aufspießrohre (18) in einer bestimmten Richtung in den Löchern (40b) des Aufnahmetabletts (40), sodann zum Zurückziehen der Aufspießrohre (18) mittels einer Verschiebung der Rohre (18) und des Tabletts (40) entgegengesetzt zur bestimmten Richtung,
— Mittel (30) zum Festhalten der kleinen Nadeln oder Bratspieße (89) gegen eine Verschiebung in den Aufspießrohren (18) in der Gegenrichtung, wobei die Mittel (30) es ermöglichen, die kleinen Nadeln oder Bratspieße (89) zum Verschieben in den Aufspießrohren (18) in der bestimmten Richtung freizugeben.

2. Aufspießmaschine nach Anspruch 1, dadurch gekennzeichnet, daß die Längsachse der Aufspießrohre (18) senkrecht ist.

3. Aufspießmaschine nach Anspruch 1 oder 2, dadurch gekennzeichnet, daß der Niederdrücker (54, 90) auf einem höheren Niveau als das Aufnahmetablett (40) angeordnet ist, das genannte Endstück der Aufspießrohre (18) ein oberer Abschnitt ist, und die bestimmte Richtung nach oben geht.

4. Aufspießmaschine nach einem der Ansprüche 1 bis 3, dadurch gekennzeichnet, daß die Aufspießrohre (18) in Längsrichtung beweglich sind.

5. Aufspießmaschine nach Anspruch 4, dadurch gekennzeichnet, daß die Aufspießrohre (18) von einem gemeinsamen Teller (6) getragen sind, der in Längsrichtung beweglich und auf der dem Niederdrücker (54, 90) entgegengesetzten Seite des Aufnahmetabletts (40) angeordnet ist.

6. Aufspießmaschine nach Anspruch 5, dadurch gekennzeichnet, daß die Bewegungen des die Aufspießrohre (18) tragenden Tellers (6) mittels eines Gewindespindel-Gewindemutter-Triebes (23, 24) ausgeführt werden, dessen Gewindespindel (24) von einem Getriebemotor (25) drehangetrieben wird.

7. Aufspießmaschine nach Anspruch 5 oder 6, dadurch gekennzeichnet, daß die Aufspießrohre (18) von einer Platte (6a) getragen sind, die auf dem beweglichen Teller (6) wegnehmbar befestigt ist.

8. Aufspießmaschine nach Anspruch 5, 6 oder 7, dadurch gekennzeichnet, daß die dem Aufnahmetablett (40) zugewandte Seite des beweglichen Tellers (6) oder der auf dem beweglichen Teller (6) wegnehmbar befestigten Platte (6a) parallele Nuten (6c) aufweist, wogegen die Gegenseite des Tellers oder der Platte mit zu den vorgenannten Nuten rechtwinkligen parallelen Nuten (6d) versehen ist, und daß in den Nuten Verriegelungsstangen (19) axial translatorisch bewegbar angeordnet sind und seitliche Ausnehmungen (19a) aufweisen, die durch Verriegelungszungen (19b) voneinander getrennt sind, welche dazu bestimmt sind, mit kreisringförmigen Nuten (18b) zusammenzuwirken, die in mit dem unteren Ende der Aufspießrohre (18) fest verbundenen Montagebüchsen (18a) ausgebildet sind, welche wegnehmbar in den Löchern (6b) angeordnet sind, die an der Schnittstelle der die Nuten (6c, 6d) voneinander trennenden Stege (6g, 6h) in das Material des Tellers oder der Platte eingearbeitet sind, wobei diese Löcher von einem Durchmesser sind, der größer ist als die Breite der Stege.

9. Aufspießmaschine nach einem der Ansprüche 1 bis 8, dadurch gekennzeichnet, daß das Aufnahmetablett (40) mit Bewegungsfreiheit in Längsrichtung montiert ist.

10. Aufspießmaschine nach Anspruch 9, gekennzeichnet durch eine Vielzahl von Mitnehmerbüchsen (8), die in Längsrichtung beweglich und von einem in Längsrichtung bewegbaren Teller (5) getragen sind, wobei die Mitnehmerbüchsen (8) dazu bestimmt sind, das Aufnahmetablett (40) abzustützen.

11. Aufspießmaschine nach Anspruch 10, in Verbindung mit einem der Ansprüche 5 bis 8, dadurch gekennzeichnet, daß der die Mitnehmerbüchsen (8) tragende Teller (5) zwischen dem Aufnahmetablett (40) und dem die Aufspießrohre (18) tragenden Teller angeordnet und mit Löchern (5b) zum Durchstekken der Aufspießrohre (18) versehen ist.

12. Aufspießmaschine nach Anspruch 10 oder 11, dadurch gekennzeichnet, daß die Längsbewegungen des die Mitnehmerbüchsen (8) tragenden Tellers (5) mittels Gewindespindel-Gewindemutter-Trieben (9, 10) ausgeführt werden, deren Gewindespindel (10) von einem Getriebemotor (11), vorzugsweise über einen Drehmomentbegrenzer (16), mittels eines Freilaufs (17) drehangetrieben wird, der die translatorische Längsbewegung des Tellers (5) bei Ausübung einer Schubkraft in der genannten Gegenrichtung ermöglicht.

13. Aufspießmaschine nach Anspruch 10, 11 oder 12, dadurch gekennzeichnet, daß die Mitnehmerbüchsen (8) von einer Platte (5a) getragen sind, die auf dem entsprechenden Teller (5) wegnehmbar befestigt ist.

14. Aufspießmaschine nach einem der Ansprüche 1 bis 13, dadurch gekennzeichnet, daß die Mittel (30) zum Festhalten der kleinen Nadel oder Bratspieße (89) gegen eine Verschiebung in den Aufspießrohren (18) in der genannten Gegenrichtung Stangen (30) zum Abstützen und Auswerfen der kleinen Nadeln oder Bratspieße (89) aufweisen, die im Innern der Aufspießrohre (18) bei relativer Längsverschiebbarkeit angeordnet sind.

15. Aufspießmaschine nach Anspruch 14, dadurch gekennzeichnet, daß die Stütz- und Auswerferstangen (30) in Längsrichtung translatorisch bewegbar angeordnet sind.

16. Aufspießmaschine nach Anspruch 15, dadurch gekennzeichnet, daß die Stütz- und Auswerferstangen (30) von einem in der Längsachse der Aufspießrohre (18) beweglichen Teller (7) getragen sind.

17. Aufspießmaschine nach Anspruch 16, in Verbindung mit einem der Ansprüche 5 bis 8, dadurch gekennzeichnet, daß der die Aufspießrohre (18) tragende bewegliche Teller (6) zwischen dem Aufnahmetablett (40) und dem die Stütz- und Auswerferstangen (30) tragenden Teller (7) angeordnet und mit Löchern (6b) zum Durchstecken der Stütz und Auswerferstangen (30) versehen ist.

18. Aufspießmaschine nach einem der Ansprüche 14 bis 17, dadurch gekennzeichnet, daß die Längsbewegungen des die Stütz- und Auswerferstangen (30) tragenden Tellers (7) mittels einer Betätigungsstange (31) erzeugt werden, die mit einer Nabe (32) starr verbunden ist, welche in einem von einem Bauteil (1e) des Gestells der Aufspießmaschine getragenen Lager (33) drehbar gelagert ist, ferner mit einem der Enden eines Hebels (34) starr verbunden ist, dessen entgegengesetztes Ende mit einem der Enden einer Kurbelstange (35) gelenkig verbunden ist, welche ihrerseits mit ihrem entgegengesetzten Ende an ein mit dem Teller (7) fest verbundenes Anschlußorgan (36) angelenkt ist.

19. Aufspießmaschine nach Anspruch 16, 17 oder 18, dadurch gekennzeichnet, daß die Stütz- und Auswerferstangen (30) von einer Platte (7a) getragen sind, die auf dem entsprechenden Teller (7) wegnehmbar befestigt ist.

20. Aufspießmaschine nach einem der Ansprüche 1 bis 19, dadurch gekennzeichnet, daß der Niederdrücker von einem Preßdeckel (90) gebildet ist.

21. Aufspießmaschine nach Anspruch 20, dadurch gekennzeichnet, daß der Preßdeckel (90) auf ganzer Dicke von einer Vielzahl von Löchern (90b) durchsetzt ist.

22. Aufspießmaschine nach einem der Ansprüche 1 bis 19, dadurch gekennzeichnet, daß der Niederdrücker einen Preßblock (54) umfaßt, der mit einer Vielzahl von Löchern (54b), deren Achsen mit den Achsen der Aufspießrohre (18) fluchten, versehen und in Längsrichtung translatorisch bewegbar ist.

23. Aufspießmaschine nach Anspruch 22, dadurch gekennzeichnet, daß der Preßblock (54) ebenfalls in Querrichtung beweglich angeordnet ist, wodurch er zur Seite zurückstellbar ist.

24. Aufspießmaschine nach Anspruch 23, dadurch gekennzeichnet, daß der Preßlock (54) von einem Galgen (59) getragen ist, der an einem seiner Enden mit einem feststehenden Ständer (60) gelenkig verbunden ist, wobei das freie Ende des Galgens so ausgebildet ist, daß es mit einem komplementär ausgebildeten Bereich (62a) eines zweiten feststehenden Ständers (62) verriegelbar ist, dabei die Ständer (60, 62) beiderseits des Aufnahmetabletts (40) angeordnet sind.

25. Aufspießmaschine nach Anspruch 24, dadurch gekennzeichnet, daß der Preßblock (54) mit längsgerichteten Führungsholmen (55) fest verbunden ist, die in vom Galgen (59) getragenen langgestreckten Hülsen (58) verschieblich sind.

26. Aufspießmaschine nach Anspruch 25, gekennzeichnet durch Anschläge (57a), welche die Zustellbewegung des Preßblocks (54) zum Aufnahmetablett (40) hin begrenzen.

27. Aufspießmaschine nach einem der Ansprüche 1 bis 26, dadurch gekennzeichnet, daß das Aufnahmetablett (40) von Längswänden (39b) eines Aufspieß- und Zuschneidekorbes (39) eingefaßt ist, die mit längsgerichteten Schneidmesser-Führungsschlitzen (39c) versehen sind.

28. Aufspießmaschine nach Anspruch 27, dadurch gekennzeichnet, daß die Wände feststehen.

29. Aufspießmaschine nach Anspruch 28, dadurch gekennzeichnet, daß der Aufspieß- und Zuschneidekorb (39) auf der dem Niederdrücker (54, 90) abgewandten Seite des Aufnahmetabletts (40) einen feststehenden Boden (39a) aufweist, der mit Löchern (39d) zum Durchstecken der Aufspießrohre (18) versehen ist.

30. Aufspießmaschine nach Anspruch 27, 28 oder 29, in Verbindung mit Anspruch 20 oder 21, dadurch gekennzeichnet, daß der Preßdeckel (90) in einem Teil des Aufspieß- und Zuschneidekorbes (39) in Stellung bringbar ist.

31. Aufspießmaschine nach Anspruch 30, dadurch gekennzeichnet, daß der Preßdeckel (90) in seine Unterseite eingearbeitete senkrechte Nuzen (90a) aufweist.

32. Aufspießmaschine nach Anspruch 27, 28 oder 29, in Verbindung mit Anspruch 26, dadurch gekennzeichnet, daß die Preßvorrichtung einen gegenüber der Anpreßfläche des Preßblockes (54) zurückgesetzten Umfangsanschlag (57a) aufweist, um das Eindringen des letzteren in den Zuschneidekorb (39) zu begrenzen.

33. Aufspießmaschine nach einem der Ansprüche 27 bis 32, gekennzeichnet durch Mittel zum Positionieren des Zuschneidekorbes (39), die von einem Korbträger (38) gebildet sind, der über wenigstens 90° um eine Längsachse drehbar angeordnet ist, wobei Mittel (38e bis 41, 43) ein Festhalten des Korbträgers und/oder des Zuschneidekorbes in der wünschenswerten Stellung ermöglichen.

34. Aufspießmaschine nach Anspruch 33, bei der die Mittel zum Festhalten des Zuschneidekorbes (39) einen schwenkbaren Verriegelungsrahmen (43) umfassen, der mit einem Blockierorgan (46) und einer Öffnung, die eine dem Aufnahmetablett (40) gegenüberliegende Öffnung des Korbes freilegt, versehen ist, dadurch gekennzeichnet, daß eine der Seiten dieses Verriegelungsrahmens eine Führung (47 bis 51) trägt, die dazu bestimmt ist, ein Schneidmesser (77) oder Schneidmesser (77) einer Zuschneidevorrichtung oder eines Zuschneidewerkzeuges in entsprechenden Abschnitten der Führungsschlitze (39c) der Seitenwände (39b) vom Korb bei seiner oder ihrer Einführung in letztere zu zentrieren.

35. Aufspießmaschine nach Anspruch 34, dadurch gekennzeichnet, daß der Verriegelungsrahmen (43) mit einem vor dem Korbträger (38) angeordneten Schutzschild (45) gelenkig verbunden ist.

36. Aufspießmaschine nach einem der Ansprüche 27 bis 35, gekennzeichnet durch eine Station zum Zuschneiden oder in Scheiben Schneiden von im Zuschneidekorb (39) übereinandergeschichteten und auf dem Aufnahmetablett (40) aufruhenden Schichten Fleisch und/oder anderer Nahrungsmittel, wobei diese Zuschneidestation eine Zuschneidevorrichtung mit einer Vielzahl von Schneidmessern (77) umfaßt, die in die längsgerichteten Führungsschlitze (39c) in den Seitenwänden (39b) des Korbes (39) einzudringen vermögen, und dadurch, daß die Zuschneidevorrichtung von einem Schlitten (63) getragen ist, der in Querrichtung zum Korb (39) hin und von ihm weg bewegbar angeordnet ist.

37. Aufspießmaschine nach Anspruch 36, gekennzeichnet durch Mittel (67, 68, 70) zum Antreiben des Schlittens (63) im Hinblick auf die Querbewegung.

38. Aufspießmaschine nach Anspruch 37, dadurch gekennzeichnet, daß die Querbewegungen des Schlittens (63) von einem Gewindespindel-Gewindemutter-Trieb (68, 67) ausgeführt werden, dessen Gewindespindel (67) von einem Getriebemotor (70) drehangetrieben wird.

39. Aufspießmaschine nach Anspruch 36, 37 oder 38, dadurch gekennzeichnet, daß die Zuschneidevorrichtung in bezug auf den Schlitten (63) in Längsrichtung bewegbar angeordnet ist, und daß die Schneidmesser von einem Messerträger (76) getragen sind, der mit Antriebsmitteln (87) verbunden ist, um zusammen mit den Schneidmessern (77) eine Hin- und Herbewegung in Querrichtung auszuführen.

40. Aufspießmaschine nach Anspruch 39, dadurch gekennzeichnet, daß die Zuschneidevorrichtung auf starr mit dem Schlitten (63) verbundenen Längsholmen (72) verschieblich angeordnet ist.

41. Aufspießmaschine nach Anspruch 40, in Verbindung mit Anspruch 2 oder 3, dadurch gekennzeichnet, daß die mit dem Schlitten (63) fest verbundenen Längsholme (63) auch an einem quergerichteten Galgen (73) befestigt sind, der in seinem Mittelabschnitt einen längsgerichteten Arbeitszylinder (75) trägt, dessen Kolbenstange (75a) an einem Gehäuse (71) der Zuschneidevorrichtung befestigt ist, wobei der Arbeitszylinder die Aufwärtsbewegungen der Zuschneidevorrichtung antreibt, deren Abwärtsbewegungen durch Ausnutzen der Schwerkraftwirkung erzeugt werden.

42. Aufspießmaschine nach Anspruch 39, 40 oder 41, dadurch gekennzeichnet, daß der Messerträger (76) mittels Büschen (83) aufgehängt ist, die auf glatten Querholmen (84) verschieblich angeordnet sind, welche von mit einem Gehäuse (71) der Zuschneidevorrichtung starr verbundenen Bauteilen getragen sind.

43. Aufspießmaschine nach einem der Ansprüche 36 bis 42, dadurch gekennzeichnet, daß der Messerträger (76) zwei voneinander trennbare Bauteile umfaßt, nämlich einen wegnehmbaren Messerhalter (76a), der in einem eine Gleitführung bildenden Trägerblock (76b) verschieblich aufgenommen ist, und eine Stange (78), die in die Messerhalter und den Trägerblock in Querrichtung eingearbeitete Bohrungen durchdringt und sie zusammenhält.

44. Aufspießmaschine nach einem der Ansprüche 36 bis 43, dadurch gekennzeichnet, daß der Schlitten (63) seitlich mit Schutzwangen (88) fest verbunden ist, die bei Vorschub des Schlittens in Richtung auf den Aufspieß- und Zuschneidekorb (39) sich beiderseits des letzteren in Stellung bringen.

**Claims**

1. Skewering device for the preparation of brochettes of foodstuffs such as meat, vegetables, fruit or fish, characterized in that it comprises:

— a receiving tray (40) provided with passage holes (40b), for receiving at least one layer of foodstuff products,

— a pressing member (54, 90) capable of being applied to the said layer resting on the said receiving tray (40),

— a plurality of skewering tubes (18) having a lengthwise axis and comprising at least one end section capable of receiving internally, coaxially, with a possibility of relative coaxial sliding, a small skewer or stick (89), each of the skewering tubes (18) being itself capable of coaxial lengthwise sliding in a corresponding hole (40b) of the receiving tray (40),

— means for producing a relative lengthwise movement of the skewering tubes (18) and of the receiving tray (40), so as alternately to introduce the skewering tubes (18) via the said end section into a position between the receiving tray (40) and the pressing member (54, 90), by means of a sliding of the skewering tubes (18) in a determined direction in the holes (40b) of the receiving tray (40), and then freeing the skewering tubes (18) by means of a sliding of the said tubes (18) and of the said tray (40) in a direction opposite to the said determined direction, and

— means (30) for immobilizing the said small skewers or sticks (89) against a sliding in the skewering tubes (18) in the said opposite direction, the said means (30) enabling the small skewers or sticks (89) to be left free in respect of a sliding in the skewering tubes (18) in the said determined direction.

2. Skewering device according to Claim 1, characterized in that the lengthwise axis of the skewering tubes (18) is vertical.

3. Skewering device according to either of Claims 1 and 2, characterized in that the pressing member (54, 90) is arranged at a height greater than that of the receiving tray (40), and in that the said end section of the skewering tubes (18) is an upper section, and in that the said determined direction is upward.

4. Skewering device according to any one of Claims 1 to 3, characterized in that the skewering tubes (18) are movable lengthwise.

5. Skewering device according to Claim 4, characterized in that the skewering tubes (18) are carried by a common tray (6) movable lengthwise and arranged away from the pressing member (54, 90) in relation to the receiving tray (40).

6. Skewering device according to Claim 5, characterized in that the motions of the tray (6) carrying the skewering tubes (18) are provided by means of a screw-and-nut device (23—24), the screw (24) of which is driven in rotation by a geared motor (25).

7. Skewering device according to either of Claims 5 and 6, characterized in that the skewering tubes (18) are carried by a plate (6a) removably fastened on the movable tray (6).

8. Skewering device according to any one of Claims 5 to 7, characterized in that the face of the movable tray (6) which faces the receiving tray (40) or of the plate (6a) removably fastened on the movable tray (6) comprises parallel grooves (6c) while the opposite face of the said tray or of the said plate is provided with parallel grooves (6d) arranged at right angles to those preceding, and in that small bolting bars (19) are housed with a possibility of axial translation in the said grooves and comprise laterally indentations (19a) separated by small bolting tongues (19b) intended to interact with annular grooves (18b) which are incorporated in mounting bushes (18a) integrally fastened to the lower end of the skewering tubes (18) which are removably positioned in holes (6b) arranged within the thickness of the said tray or of the said plate, at the intersection of the projecting strips (6g, 6h) separating the grooves (6c, 6d), these holes having a diameter which is larger than the width of the said projecting strips.

9. Skewering device according to any one of Claims 1 to 8, characterized in that the receiving plate (40) is mounted with freedom to move lengthwise.

10. Skewering device according to Claim 9, characterized in that it comprises a plurality of driving barrels (8) movable lengthwise and carried by a tray (5) which is movable lengthwise, the said driving barrels being intended to support the receiving tray (40).

11. Skewering device according to Claim 10, in combination with any one of Claims 5 to 8, characterized in that the tray (5) carrying the driving barrels (8) is inserted between the receiving tray (40) and the tray carrying the skewering tubes (18) and is provided with passage holes (5b) for the skewering tubes (18).

12. Skewering device according to either of Claims 10 and 11, characterized in that the lengthwise motions of the plate (5) supporting the driving barrels (8) are provided by means of screw-and-nut devices (9—10) the screw (10) of which is driven in rotation by a geared motor (11), preferably via a torque limiter (16), by means of a free wheel (17) permitting the lengthwise translation of the said tray (5) under a thrust force applied in the said reverse direction.

13. Skewering device according to any one of Claims 10 to 12, characterized in that the driving barrels (8) are carried by a plate (5a) removably fastened on the corresponding tray (5).

14. Skewering device according to any one of Claims 1 to 13, characterized in that the said means (30) for immobilizing the small skewers or sticks (89) against a sliding in the skewering tubes (18) in the said reverse direction comprise rods (30) for supporting and ejecting the small skewers or sticks (89), mounted with freedom to slide lengthwise in relation to the interior of the skewering tubes (18).

15. Skewering device according to Claim 14, characterized in that the support and ejection rods (30) are mounted so that they are capable of lengthwise translation.

16. Skewering device according to Claim 15, characterized in that the support and ejection rods (30) are carried by a tray (7) movable along the lengthwise axis of the skewering tubes (18).

17. Skewering device according to Claim 16 in combination with any one of Claims 5 to 8, characterized in that the movable tray (6) carrying the skewering tubes (18) is situated between the receiving tray (40) and the tray (7) carrying the support and ejection rods (30) and is provided with passage holes (6b) for the support and ejection rods (30).

18. Skewering device according to any one of Claims 14 to 17, characterized in that the lengthwise motions of the tray (7) carrying the support and ejection rods (30) are provided by means of a manoeuvering rod (31) rigidly integrally fastened to a hub (32) mounted rotatably in a bearing (33) carried by a member (1e) of the frame (1) of the said skewering device, the said hub being, futhermore, rigidly integrally fastened to one of the ends of a lever (34) whose opposite end is articulated to one of the ends of a connecting rod (35), itself articulated via its opposite end to a connecting device (36) integrally fastened to the said tray (7).

19. Skewering device according to any one of Claims 16 to 18, characterized in that the support and ejection rods (30) are carried by a plate (7a) removably fastened on the corresponding tray (7).

20. Skewering device according to any one of Claims 1 to 19, characterized in that the pressing member consists of a compression lid (90).

21. Skewering device according to Claim 20, characterized in that the compression lid (90) comprises a plurality of holes (90b) passing through its thickness.

22. Skewering device according to any one of Claims 1 to 19, characterized in that the pressing member comprises a pressing block (54) provided with a plurality of holes (54b) whose axes are aligned with the axes of the skewering tubes (18) and which is mounted so that it is capable of lengthwise translation.

23. Skewering device according to Claim 22, characterized in that the said pressing block (54) is also mounted with freedom to move transversely, permitting its retraction by being drawn sideways.

24. Skewering device according to Claim 23, characterized in that the pressing block (54) is carried by a cross-beam (59) articulated via one of its ends to a stationary column (60), the free end of the said crossbeam being equipped to be capable of latching onto a region (62a), equipped in a complementary manner, of a second stationary column (62), the said columns (60, 62) being arranged on each side of the receiving tray (40).

25. Skewering device according to Claim 24, characterized in that the pressing block (55) is integrally fastened to lengthwise guidance shafts (55) mounted so as to be capable of sliding in bushes with a lengthwise axis (58) which are carried by the cross-beam (59).

26. Skewering device according to Claim 25, characterized in that it comprises abutment means (57a) limiting the movement of the pressing block (54) in the direction of approach in relation to the receiving tray (40).

27. Skewering device according to any one of Claims 1 to 26, characterized in that the receiving tray (40) is edged with lengthwise walls (39b) of a skewering and cutting basket (39), which are provided with lengthwise slots (39c) for guiding the knife blades.

28. Skewering device according to Claim 27, characterized in that the said walls are stationary.

29. Skewering device according to Claim 28, characterized in that the skewering and cutting basket (39) comprises a stationary bottom (39a) provided with passage holes (39d) for the skewering tubes (18) away from the pressing member (54, 90) in relation to the receiving tray (40).

30. Skewering device according to any one of Claims 27 to 29 in combination with either of Claims 20 and 21, characterized in that the compression lid (90) is capable of being positioned in a part of the skewering and cutting basket (39).

31. Skewering device according to Claim 30, characterized in that the compression lid comprises perpendicular grooves (90a) arranged in its lower face.

32. Skewering device according to any one of Claims 27 to 29, in combination with Claim 26, characterized in that the pressing device comprises a peripheral abutment (57a) arranged set back in relation to the pressure face of the pressure block (54), in order to limit the insertion of the latter into the cutting basket (39).

33. Skewering device according to any one of Claims 27 to 32, characterized in that it comprises means for positioning the cutting basket (39), the said positioning means consisting of a support for the basket (38) mounted so that it is capable of rotating through at least 90° around a lengthwise axis, and means (38e—41, 43) enabling the said basket support and/or the said cutting basket to be immobilized in the desirable position.

34. Skewering device according to Claim 33, in which the means enabling the cutting basket (39) to be immobilized comprise a pivoting bolting frame (43) provided with a locking member (46) and equipped with an opening uncovering an opening in the said basket away from the receiving tray (40), characterized in that one of the sides of this bolting frame carries a guide (47—51) intended to centre one or more of the blades (77) of a cutting device or tool in corresponding sections of the guidance slots (39c) in the side walls (39b) of the basket, when it or they enter these.

35. Skewering device according to Claim 34, characterized in that the bolting frame (43) is articulated on a protective shield (45) placed facing the basket support (38).

36. Skewering device according to any one of Claims 27 to 35, characterized in that it comprises a station for cutting or slicing superposed layers of meat and/or other foodstuff products housed inside the cutting basket (39) and resting on the receiving tray (40), this cutting station comprising a cutting device equipped with a pluraltiy of cutting blades (77) capable of engaging the lengthwise guidance slots (39c) in the side walls (39b) of the basket (39), and in that the said cutting device is carried by a trolley (63) mounted with freedom of transverse approach or withdrawal motion relative to the basket (29).

37. Skewering device according to Claim 36, characterized in that it comprises means (67, 68, 70) for driving the trolley (63) with a view to the said transverse motion.

38. Skewering device according to Claim 37, characterized in that the transverse motions of the said trolley (63) are provided by a screw-and-nut system (68—67) the screw (67) of which is driven in rotation by a geared motor (70).

39. Skewering device according to any one of Claims 36 to 38, characterized in that the cutting device is mounted so that it is capable of lengthwise motion relative to the trolley (63) and in that the cutting blades are carried by a knife carrier (76) coupled to driving means (87) in order to perform, with the blades (77), a reciprocal transverse motion.

40. Skewering device according to Claim 39, characterized in that the cutting device is mounted so that it is capable of sliding over the lengthwise shafts (72) which are rigidly integrally fastened to the trolley (63).

41. Skewering device according to Claim 40 in combination with either of Claims 2 and 3, characterized in that the lengthwise shafts (72) integrally fastened to the trolley (63) are also fastened to a transverse cross-beam (73) which in its median part carries a jack (75) arranged lengthwise and whose rod (75a) is fastened to a casing (71) of the cutting device, the said jack providing the upward motions of the said cutting device whose downward motions are provided by gravity.

42. Skewering device according to any one of Claims 39 to 41, characterized in that the knife carrier (76) is suspended by means of bushes (83) mounted so that they are capable of sliding over smooth transverse shafts (84) carried by members which are rigidly integrally fastened to a casing (71) of the cutting device.

43. Skewering device according to any one of Claims 36 to 42, characterized in that the knife carrier (76) comprises two separable members, namely a removable blade-carrier (76a) housed, capable of sliding, in a support block (76b) forming a slide channel, and a skewer (78) passing through the transverse apertures arranged in the said blade-carriers and support block, being responsible for their assembly.

44. Skewering device according to any one of Claims 36 to 43, characterized in that the trolley (63) is integrally fastened, laterally, to the protective cheeks (88) which are positioned on each side of the skewering and cutting basket (39) when the said trolley moves forward in the direction of the latter.

Fig.1

Fig.2

0 078 232

Fig.3

Fig.4

Fig.5

Fig.6

Fig.8

Fig.9

Fig.7

Fig.10

Fig.11

Fig.12

Fig.14

Fig.13

Fig.16

Fig.17

Fig.18

Fig.19

Fig.20

0 078 232

0 078 232

Fig.15

Fig.21

Fig.22

Fig.23

Fig. 24

0 078 232

14

Fig. 25

Fig.26

89

40a

40b
18
8a
8
40

Fig. 27

8

Fig. 29

Fig. 30

89
T
18
40
8
39a
39
39d
30
38
2

Fig. 28

89
T
40
8
39a
30
18
38
2

89
T
40
40b
40c
39d
8a
8
18
38
2
30